# EUROPÄISCHE PATENTANMELDUNG

(11) **EP 1 987 718 A1**
(43) Veröffentlichungstag der Anmeldung: **05.11.2008**
(21) Anmeldenummer: 07400012.6
(22) Anmeldetag: 30.04.2007
(51) Int. Cl.: A01N 43/40, A01N 25/32

(54) **Verwendung von Pyridin-2-oxy-3-carbonamiden als Safener**

(71) Anmelder: Bayer CropScience AG, 40789 Monheim (DE)
(72) Erfinder: Rosinger, Christopher, 65719 Hofheim (DE); Ziemer, Frank, 65830 Kriftel (DE); Auler, Thomas, 42799 Leichlingen (DE); Bickers, Udo, 49835 Wietmarschen (DE); Hacker, Erwin, 65239 Hochheim (DE)

(57) **Zusammenfassung**

Erfindungsgemäß können Verbindungen der allgemeinen Formel (I) oder deren Salze (Pyridin-2-oxy-3-carbonamide), 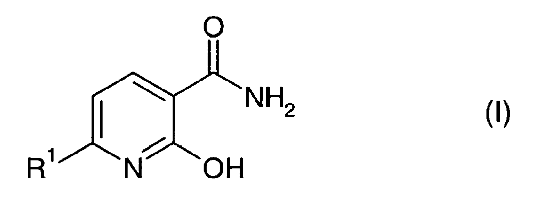 worin
R¹ einen (C₁-C₄)Haloalkylrest bedeutet,
als Safener, das heißt, als Mittel zum Vermeiden oder Reduzieren von phytotoxischen Wirkungen von Pestiziden, vorzugsweise Herbiziden, an Nutzplanzen verwendet werden.

## Beschreibung

Die vorliegende Erfindung betrifft nutzpflanzenschützende Mittel, welche spezielle Verbindungen als Safener zur Reduktion von phytotoxischen Wirkungen von Pestiziden, insbesondere Herbiziden, als Safener enthalten.

Bei der Bekämpfung unerwünschter Organismen in land- und forstwirtschaftlichen Nutzpflanzenkulturen mit Pestiziden werden häufig auch die Nutzpflanzen durch die verwendeten Pestizide mehr oder weniger stark geschädigt. Dieser unerwünschte phytotoxische Nebeneffekt tritt in besonderem Maße bei der Verwendung von zahlreichen Herbiziden - und dort in erster Linie bei der Applikation im Nachauflauf - in Nutzpflanzenkulturen wie beispielsweise Mais, Reis oder Getreide auf. Durch den Einsatz sogenannter "Safener" oder "Antidots" können in manchen Fällen die Nutzpflanzen gegen die phytotoxischen Eigenschaften der Pestizide geschützt werden, ohne daß die pestizide Wirkung gegenüber den Schadorganismen geschmälert oder wesentlich beeinträchtigt wird. In manchen Fällen ist sogar eine verbesserte pestizide Wirkung gegen Schadorganismen wie Unkräutern beobachtet worden.

Die bislang als Safener bekannt gewordenen Verbindungen gehören zu einer großen Zahl unterschiedlicher chemischer Strukturklassen, wobei deren Eignung für die Safeneranwendung in der Regel auch von den chemischen Strukturen der Pestizide und von den Nutzpflanzenkulturen abhängig ist.

Lange bekannt sind Safenerwirkungen von Verbindungen aus der Gruppe der Derivate von Phenoxy- oder Heteroaryloxyalkancarbonsäuren, wenn diese Verbindungen in Kombination mit Herbiziden angewandt werden. Beispiele für solche Verbindungen sind MCPA und ähnliche Verbindungen, welche zugleich gegen Schadpflanzen noch herbizid wirksam sind, oder Cloquintocet-mexyl.

Weiterhin bekannt sind Safener aus der Gruppe der Derivate von N-phenylsubstituierten Heteroaromat-carbonsäureestern mit mehreren Heteroatomen im Heterocyclus. Beispiele für solche Safener sind die in Handelsprodukten verwendeten Safener Mefenpyr-diethyl und Isoxadifen-ethyl.

Aus WO-A-2004/084631 ist die Verwendung von hydroxy-substituierten aromatischen Carbonsäurederivaten bekannt. In WO 2005/015994 sind speziell Derivate der Salizylsäure als Safener beschrieben. Diese eignen sich besonders für die Anwendung als Safener in Mais- und Sojakulturen.
Weiterhin sind aus WO 2005/112630 1,2-Dihydrochinoxalin-2-on-derivate als Safener bekannt.

Wirkstoffe aus der chemischen Klasse der Pyridone mit pestiziden Eigenschaften sind aus der Literatur bekannt. Es werden unterschiedliche biologische Wirkungen beschrieben; so ist z. B. in WO 2001/014339 die fungizide Wirkung bestimmter substituierter Pyridoncarboxamide erwähnt, WO-A-2005/042492 und WO-A-2005/042493 beschreiben u.a. die fungizide Wirkung von Heterocyclylcarboxaniliden. EP 544151 beschreibt die Wirkung von hydroxy-substituierten Pyridoncarboxamiden als Herbizide.
Weiterhin sind Vertreter mit pharmakologischen Eingenschaften bekannt. So werden in WO 2001/055115 Nicotinanilide als Induktoren der Apoptose sowie in US 2004/0116479 Dialkylnicotinamide als Inhibitoren der Angiogenese beschrieben.

Ferner beschreibt EP 522392 6-Trifluormethyl-substituierte Pyridoncarboxamide als Vorprodukte zur Synthese herbizid wirksamer Sulfonylharnstoffe. In Helv. Chim. Acta 71 (1988) 596-601 und GB 2305174 werden 1,2-Dihydro-2-oxo-6-trifluormethylpyridin-3-carboxamid, 6-Chlor(difluor)methyl-1,2-dihydro-2-oxo-pyridin-3-carboxamid sowie 6-Difluormethyl-1,2-dihydro-2-oxo-pyridin-3-carboxamid als Zwischenprodukte in der Synthese von Pyranopyridinen erwähnt.

Eine Verwendung derartiger Verbindungen als Safener in Kombination mit bestimmten Pestiziden ist noch nicht bekannt.

Bei der Anwendung von Safenern zum Schutz der Nutzpflanzen vor den Pestizidschädigungen hat sich gezeigt, daß die bekannten Safener in vielen Fällen Nachteile aufweisen können. Dazu zählen:
- der Safener vermindert die Wirkung der Pestizide, insbesondere die von Herbiziden, gegen die Schadpflanzen,
- die nutzpflanzenschützenden Eigenschaften sind nicht ausreichend,
- in Kombination mit einem bestimmten Herbizid ist das Spektrum der Nutzpflanzen, in denen der Safener/Herbizid-Einsatz erfolgen soll, nicht ausreichend groß,
- ein bestimmter Safener ist nur mit wenigen Herbiziden kombinierbar,
- Die Verwendung von Safenern erhöht die zu applizierende Aufwandmenge und Menge an Formulierung und kann damit anwendungstechnische Probleme verursachen.

Aus den genannten Gründen besteht ein Bedarf an der Bereitstellung alternativer nutzpflanzenschützender Mittel, die Verbindungen mit Safener-Wirkung und gegebenenfalls Pestizide, vorzugsweise Herbizide enthalten.

Gegenstand der Erfindung ist die Verwendung von Verbindungen der allgemeinen Formel (I) oder deren Salzen (Pyridin-2-oxy-3-carbonamiden), 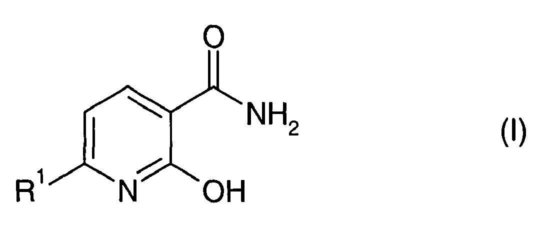 worin
- R¹: einen (C₁-C₄)Haloalkylrest, vorzugsweise einen Rest der Formel CF₃, CF₂Cl oder CF₂H bedeutet,
als Safener, das heißt, als Mittel zum Vermeiden oder Reduzieren von phytotoxischen Wirkungen von Pestiziden, vorzugsweise Herbiziden, an Nutzplanzen, vorzugsweise Kulturpflanzen.

Wenn die Verbindungen durch Wasserstoffverschiebung Tautomere bilden können, welche strukturell durch die Formel (I) formal nicht erfasst würden, so werden diese Tautomere gleichwohl von der Definition der erfindungsgemäßen Verbindungen der Formel (I) umfasst. Insbesondere umfasst sind von der Definition der Verbindungen der Formel (I) die tautomeren Strukturen der Formel (I') (Pyrid-2-on-3-carboxamide) oder deren Salze, 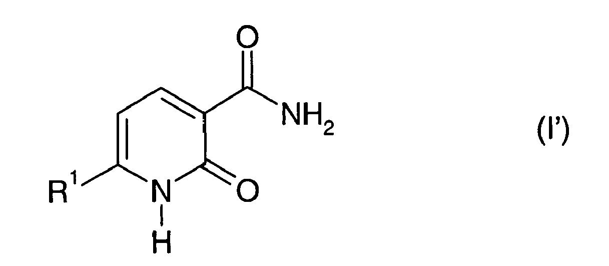 worin
- R¹: wie in Formel (I) definiert ist.

Die Verbindungen der allgemeinen Formel (I) können je nach Art und Verknüpfung der Substituenten als Stereoisomere vorliegen. Die durch ihre spezifische Raumform definierten möglichen Stereoisomere, wie Enantiomere, Diastereomere, Z- und E-Isomere und ihre Gemische sind alle von der Formel (I) umfaßt.

Die Verbindungen der Formel (I) können Salze bilden. Salzbildung kann durch Einwirkung einer Base auf solche Verbindungen der Formel (I) erfolgen, die ein acides Wasserstoffatom tragen, z.B. das Wasserstoffatom in der Hydroxylgruppe am Pyridylring. Geeignete Basen sind beispielsweise organische Amine sowie Ammonium-, Alkali- oder Erdalkalimetallhydroxide, -carbonate und -hydrogencarbonate, insbesondere Natrium- und Kaliumhydroxid, -carbonat und -hydrogencarbonat. Diese Salze sind Verbindungen, in denen der acide Wasserstoff durch ein für die Landwirtschaft geeignetes Kation ersetzt wird, beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze.

Die Verbindungen der Formel (I) können durch Anlagerung einer geeigneten anorganischen oder organischen Säure, wie beispielsweise Mineralsäuren, wie beispielsweise HCl, HBr, H₂SO₄ oder HNO₃, oder organische Säuren, wie Ameisensäure, Essigsäure, Propionsäure, Oxalsäure oder Sulfonsäuren, an eine basische Gruppe, wie z.B. Amino, Alkylamino, Dialkylamino, Salze bilden. Diese Salze enthalten dann die konjugierte Base der Säure als Anion.

Gegenstand der Erfindung sind auch nutzpflanzenschützende Mittel, welche Verbindungen der Formel (I) oder deren Salze in Kombination mit Pestiziden, insbesondere Herbiziden, und gegebenenfalls Formulierungshilfsmitteln enthalten.

Die Verbindungen der Formel (I) sind bekannt oder können analog bekannten Verfahren hergestellt werden. Ihre Anwendung als Safener zur Reduktion phytotoxischer Wirkungen von Pestiziden an Nutzpflanzen ist bisher nicht bekannt gewesen.
So sind einige Verbindungen der Formel (I) bereits konkret als Zwischenprodukte zur Herstellung von Wirkstoffen beschrieben; siehe GB-A-2305174 (Verb. (I), worin R¹ = CF₃, CF₂Cl oder CF₂H und R³ = R⁴ = H).

Beispielsweise sind einige Verbindungen der Formel (I) im Prinzip als Zwischenprodukte zur Herstellung herbizid wirksamer Sulfonylharnstoffe oder Pyranopyridine beschrieben worden und können nach den bekannten Verfahren hergestellt werden. Beispielsweise werden in EP 522392, Helv. Chim. Acta 71 (1988) 596-601 und in GB-A-2305174 Verfahren zur Herstellung derartiger Verbindungen beschrieben. GB-A-2305174 beschreibt die Herstellung von 6-Trifluormethyl-2-hydroxy-nicotinamid durch Reaktion von Malonamid und (E)-1,1,1-Trifluor-3-buten-2-on.

Im Folgenden werden die Verbindungen der Formel (I) und ihre Salze auch kurz als erfindungsgemäß verwendete "Verbindungen (I)" bezeichnet.

Die vorstehend und weiter unter verwendeten Bezeichnungen sind dem Fachmann geläufig und haben insbesondere die im Folgenden erläuterten Bedeutungen:
Der Ausdruck "(C₁-C₄)Alkyl" bedeutet eine Kurzschreibweise für offenkettiges Alkyl mit einem bis 4 Kohlenstoffatomen entsprechend der Bereichsangabe für C-Atome, d. h. umfasst die Reste Methyl, Ethyl, 1-Propyl, 2-Propyl, 1-Butyl, 2-Butyl, 2-Methylpropyl oder tert-Butyl. Allgemeine Alkylreste mit einem größeren angegebenen Bereich von C-Atomen, z. B. "(C₁-C₆)Alkyl", umfassen entsprechend auch gradkettige oder verzweigte Alkylreste mit einer größeren Zahl von C-Atomen, d. h. gemäß Beispiel auch die Alkylreste mit 5 und 6 C-Atomen.
Alkylreste, auch in den zusammengesetzten Bedeutungen wie Haloalkyl bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl.
Die Bezeichnung "Halogen" bedeutet beispielsweise Fluor, Chlor, Brom oder lod. "Haloalkyl" oder "(C₁-C₄)Haloalkyl" bedeutet durch gleiche oder verschiedene Halogenatome, vorzugsweise aus der Gruppe Fluor, Chlor und Brom, insbesondere aus der Gruppe Fluor und Chlor, teilweise oder vollständig substituiertes Alkyl bzw. (C₁-C₄)Alkyl, z.B. Monohaloalkyl (= Monohalogenalkyl) wie CH₂CH₂Cl, CH₂CH₂F, CH₂CICH₃, CH₂FCH₃, CH₂Cl, CH₂F; Perhaloalkyl wie CCl₃ oder CF₃ oder CF₃CF₂; Polyhaloalkyl wie CHF₂, CH₂F, CH₂FCHCl, CHCl₂, CF₂CF₂H, CH₂CF₃, CH₂CICH₃, CH₂FCH₃.

Wenn ein Grundkörper "durch einen oder mehrere Reste" aus einer Aufzählung von Resten (= Gruppe) oder einer generisch definierten Gruppe von Resten substituiert ist, so schließt dies jeweils die gleichzeitige Substitution durch mehrere gleiche und/oder strukturell unterschiedliche Reste ein.

Wenn ein allgemeiner Rest mit "Wasserstoff" definiert ist, bedeutet dies ein Wasserstoffatom.

Mit "yl-Position" eines Restes ist dessen Bindungstelle bezeichnet.

Vor allem aus den Gründen der höheren kulturpflanzen- oder nutzpflanzenschützenden Wirkung (Safenerwirkung), besseren Selektivität und/oder besseren Herstellbarkeit sind erfindungsgemäße Verwendungen von Verbindungen der genannten Formel (I) oder deren Salzen von besonderem Interesse, worin einzelne Reste eine der bereits genannten oder im folgenden genannten bevorzugten Bedeutungen haben, oder insbesondere solche, worin eine oder mehrere der bereits genannten oder im folgenden genannten bevorzugten Bedeutungen kombiniert auftreten.

Bevorzugt sind die Verbindungen der genannten Formel (I) oder deren Salze (und Tautomeren), worin R¹ einen (C₁-C₂)alkylrest, der durch einen oder mehrere Halogene aus der Gruppe Fluor und Chlor substituiert ist, bedeutet. Weiter bevorzugt bedeutet R¹ einen Methylrest, der durch einen oder mehrere Halogene aus der Gruppe Fluor und Chlor substituiert ist, bedeutet.

Weiter bevorzugt sind die Verbindungen der Formeln (Ia), (Ib) und (Ic) und deren Salze (und Tautomere):

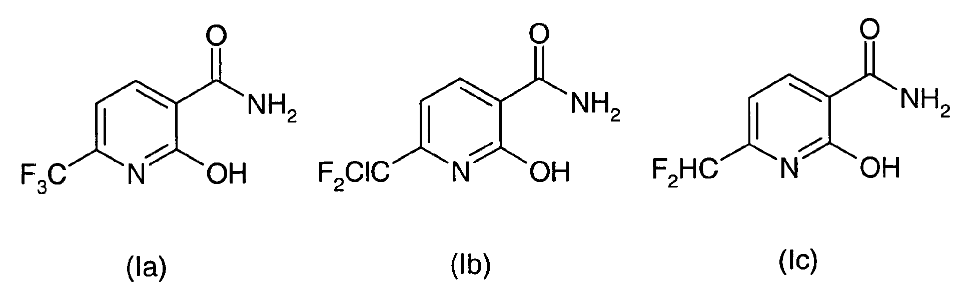

Die Verbindungen der allgemeinen Formel (I) können hergestellt werden, indem man beispielsweise

Die Verbindungen der allgemeinen Formel (I) können hergestellt werden, indem man beispielsweise
(a) eine Carbonsäure der allgemeinen Formel (II) 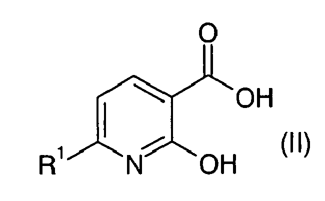 worin R¹ wie in der herzustellenden Verbindung der Formel (I) definiert ist, mit Ammoniak oder einem Ammoniumsalz,
   gegebenenfalls in Gegenwart eines carbonsäureaktivierenden Reagenzes, beispielsweise N,N-Carbonyldiimidazol (CDI), oder eines wasserentziehenden Mittels, beispielsweise Dicyclohexylcarbodiimid (DCC), zur Verbindung der Formel (I) umsetzt oder
(b) einen Carbonsäureester der allgemeinen Formel (III) 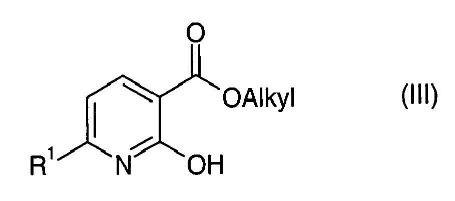 worin R¹ wie in der herzustellenden Verbindung der Formel (I) definiert ist, und "Alkyl" einen Alkylrest, beispielsweise Methyl oder Ethyl, bedeutet, mit Ammoniak oder einem Ammoniumsalz zur Verbindung der Formel (I) umsetzt oder
(c) ein Carbonsäurehalogenid oder -anhydrid der allgemeinen Formel (IV), 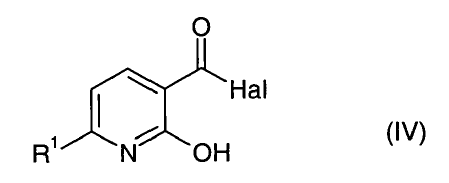 worin R¹ wie in der herzustellenden Verbindung der Formel (I) definiert ist und Hal ein Halogenatom, beispielsweise Chlor, oder einen Acyloxyrest bedeutet, mit Ammoniak oder einem Ammoniumsalz zur Verbindung der Formel (I) umsetzt,
(d) eine Verbindung der Formel (V), 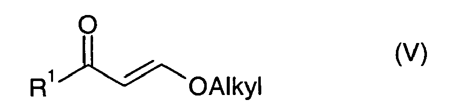 worin R¹ wie in der herzustellenden Verbindung der Formel (I) definiert ist und "Alkyl" einen Alkylrest, beispielsweise Methyl oder Ethyl, bedeutet, mit Malonsäurediamid zur Verbindung der Formel (I) umsetzt.

Die Amidbildungen nach Variante (a) können beispielsweise in einem inerten organischen Lösungsmittel in einem Temperaturbereich zwischen 0 °C und 150 °C, vorzugsweise 0 °C und 50 °C durchgeführt werden. Als organische Lösungsmittel eignen sich beispielsweise polare protische oder aprotische Lösungsmittel wie Ether, z. B. Diethylether, Tetrahydrofuran und Dioxan, oder Nitrile wie Acetonitril, oder Amide wie Dimethylformamid.
Die Amidbildungen nach Variante (b) können beispielsweise in einem inerten organischen Lösungsmittel in einem Temperaturbereich zwischen 0 °C und 150 °C, vorzugsweise 50 °C und 100 °C durchgeführt werden. Als organische Lösungsmittel eignen sich beispielsweise polare protische oder aprotische Lösungsmittel wie Ether, z. B. Tetrahydrofuran und Dioxan, oder Nitrile wie Acetonitril, oder Amide wie Dimethylformamid. Bevorzugt ist jedoch die Amidbildung nach Variante (b) bei erhöhten Temperaturen durch Umsetzung der Reaktionspartner in Substanz.
Die Amidbildungen nach Variante (c) können beispielsweise in Gegenwart eines säurebindenden Mittels in einem inerten organischen Lösungsmittel in einem Temperaturbereich zwischen 0 °C und 150 °C, vorzugsweise 0 °C und 50 °C durchgeführt werden. Als organische Lösungsmittel eignen sich beispielsweise polare protische oder aprotische Lösungsmittel wie Ether, z. B. Diethylether, Tetrahydrofuran und Dioxan, oder Nitrile wie Acetonitril, oder Amide wie Dimethylformamid. Säurebindende Mittel sind beispielsweise Alkali- oder Erdalkalimetall-carbonate wie z. B. Natrium-, Kalium- oder Calcium-carbonat, Alkali- oder Erdalkalimetall-hydroxide, wie Natrium-, Kalium oder Calcium-hydroxid, oder Alkalimetall-hydride oder-amide, wie Natrium- oder Kalium-hydrid oder-amid, oder auch organische Basen, wie Triethylamin, Pyridin, Dimethylaminopyridin, DBU (1,8-Diazabicyclo[5.4.0]-undec-7-en), DBN (1,5-Diazabicyclo[4.3.0]non-5-en) und 1,4-Diaza-bicyclo[2.2.2]octan.
Die Amidbildungen nach Variante (d) können analog den Verfahren durchgeführt werden, wie sie in EP 522392 und Helv. Chim. Acta 71 (1988) 596-601 und GB 2305174 beschrieben sind. Das Malonsäurediamid kann in der Regel in einem organischen wasserfreien polaren protischen oder aprotischen Lösungsmittel, beispielsweise in einem Alkohol, mit einer starken Base wie einem Alkalimetall, Alkalimetallhydrid oder Alkalimetallalkoholat in ein reaktives Salz überführt und dann mit der Verbindung der Formel (V) umgesetzt werden. Die Umsetzung mit der Verbindung (V) kann in der Regel in einem Temperaturbereich zwischen 0 °C und dem Siedepunkt des Lösungsmittels (je nach Lösungsmittel etwa bis 150 °C) durchgeführt werden.

Die Verbindungen der allgemeinen Formeln (II), (III) oder (IV) sind entweder kommerziell erhältlich oder können nach oder analog dem Fachmann bekannten Methoden hergestellt werden (z. B. Helv. Chim. Acta 71 (1988) 596; EP 502740; EP 522392) .

So sind beispielsweise Verbindungen der Formel (III) durch Umsetzung von Alkoxyvinylethern der Formel (V) mit Malonsäurealkylester-amiden der Formel (VI) zugänglich.

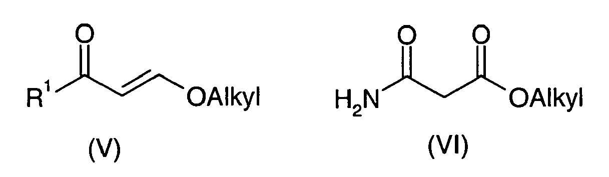

Die Edukte der Formel (V) sind entweder kommerziell erhältlich oder können nach bekannten Methoden hergestellt werden (z. B. Synthesis 2000, 738-742; J. Fluor. Chem., 107, 2001, 285-300; Organometallics 15, 1996, 5374-5379).

Gegenstand der Erfindung ist auch das Verfahren zum Schützen von Kultur- oder Nutzpflanzen vor phytotoxischen Wirkungen von Pestiziden, insbesondere Herbiziden, welche Schäden an Pflanzen verursachen, dadurch gekennzeichnet, dass man Verbindungen der Formel (I) oder deren Salze als Safener anwendet, vorzugsweise eine effektive Menge der Verbindungen der Formel (I) oder deren Salzen auf die Pflanzen, Teile der Pflanzen oder deren Samen (oder Saatgut) appliziert.

Die Safener (= Verbindungen der Formel (I) oder deren Salze) sind geeignet, zusammen mit Wirkstoffen (Pestiziden) zur selektiven Bekämpfung von Schadorganismen in einer Reihe von Pflanzenkulturen eingesetzt zu werden, beispielsweise in wirtschaftlich bedeutenden Kulturen wie Getreide (Weizen, Gerste, Triticale, Roggen, Reis, Mais, Hirse), Zuckerrübe, Zuckerrohr, Raps, Baumwolle, Sonnenblume, Erbsen, Bohnen und Soja. Von besonderem Interesse ist dabei die Anwendung in monokotylen Kulturen wie Getreide (Weizen, Gerste, Roggen, Triticale, Sorghum), inklusive Mais und Reis, und monokotylen Gemüsekulturen, aber auch in dikotylen Kulturen wie beispielsweise Soja, Raps, Baumwolle, Wein, Gemüsepflanzen, Obstpflanzen und Zierpflanzen. Die Herbizid-Safener-Kombinationen mit Safenern (I) sind auch geeignet zur Bekämpfung von Schadpflanzen auf Beeten und Flächen von Nutz- und Zierpflanzen, wie beispielsweise Rasenflächen mit Nutz- oder Zierrasen, speziell Weidelgras, Rispengras oder Bermudagras.

Bei den Nutz- und Kulturpflanzen, in denen die Herbizid-Safener-Kombinationen mit Safenern (I) verwendet werden können, sind auch gegenüber einigen Pestiziden ganz oder partiell tolerante Mutantenkulturen oder ganz oder partiell tolerante transgene Kulturen von Interesse, z. B. Maiskulturen, die gegenüber Glufosinate oder Glyphosate resistent sind, oder Sojakulturen, die gegen herbizide Imidazolinone resistent sind. Der besondere Vorteil der neuartig eingesetzten Safener ist jedoch ihre effektive Wirkung in Kulturen, welche normalerweise nicht ausreichend tolerant gegenüber den zur Anwendung zu bringenden Pestiziden sind.

Die erfindungsgemäßen Verbindungen der Formel (I) können zur gemeinsamen Anwendung mit Pestiziden gleichzeitig oder in beliebiger Reihenfolge mit den Wirkstoffen ausgebracht werden und sind dann in der Lage, schädliche Nebenwirkungen dieser Wirkstoffe bei Kulturpflanzen zu reduzieren oder völlig aufzuheben, ohne die Wirksamkeit dieser Wirkstoffe gegen unerwünschte Schadorganismen zu beeinträchtigen oder wesentlich zu reduzieren. Dabei können auch Schädigungen, welche durch die Anwendung mehrerer Pestizide entstehen, z.B. durch mehrere Herbizide oder durch Herbizide in Kombination mit Insektiziden oder Fungiziden, wesentlich reduziert oder völlig aufgehoben werden. Hierdurch kann das Einsatzgebiet herkömmlicher Pestizide ganz erheblich erweitert werden.

Für den Fall, dass die Pestizide Herbizide darstellen, werden diese Mittel in der Regel nach entsprechender Verdünnung entweder direkt auf die Anbaufläche, auf die bereits gekeimten Schad- und/oder Nutzpflanzen oder auf die bereits aufgelaufenen Schad- und/oder Nutzpflanzen appliziert. Für den Fall, daß die erfindungsgemäßen Mittel kein Pestizid enthalten, können diese Mittel im sogenannten Tankmix-Verfahren - d.h. unmittelbar vor dem Aufbringen auf die zu behandelnde Fläche erfolgt beim Anwender die Vermischung und Verdünnung der separat formulierten Produkte (= nutzpflanzenschützendes Mittel und Pestizid) - oder zeitlich vor der Anwendung eines Pestizids, oder zeitlich nach der Anwendung eines Pestizids, oder zur Saatgut-Vorbehandlung, d.h. beispielsweise zur Beizung des Nutzpflanzensaatguts verwendet werden. Bevorzugt ist die zeitnahe Anwendung des Safeners mit dem Pestizid, insbesondere, wenn der Safener nach dem Pestizide, z. B. Herbizid, auf die Pflanzen appliziert wird.

Die vorteilhaften Wirkungen der erfindungsgemäßen Verbindungen (I) werden beobachtet, wenn man sie zusammen mit den Pestiziden im Vorauflauf oder im Nachauflauf einsetzt, beispielsweise bei gleichzeitiger Applikation als Tank-mix oder als Co-formulierung oder bei einer separaten Applikation parallel oder nacheinander (Split-Applikation). Auch ist es möglich die Applikation mehrfach zu wiederholen. Manchmal kann es sinnvoll sein, eine Vorauflaufapplikation mit einer Nachauflaufapplikation zu kombinieren. Meist bietet sich die Anwendung als Nachauflaufapplikation auf die Nutz- oder Kulturpflanze mit gleichzeitiger oder späterer Applikation des Pestizids an. In Frage kommt auch die Anwendung der erfindungsgemäßen Verbindungen (I) bei der Saatgutbeizung, der (Tauch-)Behandlung von Keimpflanzen (z. B. Reis) oder Behandlung von anderem Vermehrungsgut (z. B. Kartoffelknollen).

Oftmals werden bei der Anwendung der erfindungsgemäßen Verbindungen (I) in Kombination mit Herbiziden neben der Safenerwirkung auch Wirkungsverstärkungen in der Herbizidwirkung gegenüber Schadpflanzen beobachtet. Weiterhin ist das Wachstum der Nutz- und Kulturpflanzen in vielen Fällen verbessert, und es können die Ernteerträge erhöht werden.

Die erfindungsgemäßen Mittel können ein oder mehrere Pestizide enthalten. Als Pestizide kommen beispielsweise Herbizide, Insektizide, Fungizide, Akarizide und Nematizide, welche jeweils bei alleiniger Anwendung phytotoxische Schäden an den Kulturpflanzen ergeben würden oder bei denen eine Schädigung wahrscheinlich wäre, in Frage. Von besonderem Interesse sind entsprechende pestizide Wirkstoffe aus den Gruppen der Herbizide, Insektizide, Akarizide, Nematizide und Fungizide, insbesondere Herbizide.

Das Gewichtsverhältnis Safener zu Pestizid kann innerhalb weiter Grenzen variiert werden und liegt in der Regel im Bereich von 1:100 bis 100:1, vorzugsweise 1:20 bis 20:1, insbesondere 1:10 bis 10:1. Das optimale Gewichtsverhältnis Safener zu Pestizid hängt in der Regel sowohl von dem jeweils eingesetzten Safener und dem jeweiligen Pestizid als auch von der Art der zu schützenden Nutz- oder Kulturpflanze ab. Die erforderliche Aufwandmenge an Safener kann je nach verwendetem Pestizid und Art der zu schützenden Nutzpflanze innerhalb weiter Grenzen variiert werden und liegt in der Regel im Bereich von 0,001 bis 10 kg, vorzugsweise 0,01 bis 1 kg, insbesondere 0,05 bis 0,5 kg Safener je Hektar. Die für eine erfolgreiche Behandlung notwendigen Mengen und Gewichtsverhältnisse können durch einfache Vorversuche ermittelt werden.

Im Falle einer Saatbeizung werden beispielsweise 0,005 bis 20 g Safener pro Kilogramm Saatgut, vorzugsweise 0,01 bis 10 g Safener pro Kilogramm Saatgut, insbesondere 0,05 bis 5 g Safener pro Kilogramm Saatgut eingesetzt.

Wenn Lösungen von Safener in der Saatbehandlung benutzt werden und das Saatgut oder Keimlinge mit den Lösungen benetzt werden, so liegt die geeignete Konzentration in der Regel im Bereich von 1 bis 10000 ppm, vorzugsweise 100 bis 1000 ppm bezogen auf das Gewicht. Die für eine erfolgreiche Behandlung notwendigen Mengen und Gewichtsverhältnisse können durch einfache Vorversuche ermittelt werden.

Die Safener können in üblicher Weise separat oder zusammen mit den Pestiziden formuliert werden. Gegenstand sind daher auch die nutzpflanzen- oder kulturpflanzenschützenden Mittel.

Bevorzugt ist die gemeinsame Anwendung von Safener und Pestizid, insbesondere die von Safener und Herbizid als Fertigformulierung oder die Anwendung im Tankmix-Verfahren.

Ebenso bevorzugt ist die Anwendung des Safeners (I) in der Saatgutbehandlung mit späterer Applikation von Pestiziden, vorzugsweise Herbiziden, nach der Aussaat im Vor- oder Nachauflaufverfahren.

Die Verbindungen der Formel (I) oder deren Salze können als solche oder in Form ihrer Zubereitungen (Formulierungen) mit anderen pestizid wirksamen Stoffen, wie z. B. Insektiziden, Akariziden, Nematiziden, Herbiziden, Fungiziden, Safenern, Düngemitteln und/oder Wachstumsregulatoren kombiniert eingesetzt werden, z. B. als Fertigformulierung oder als Tankmischungen. Die Kombinationsformulierungen können dabei auf Basis der obengenannten Formulierungen hergestellt werden, wobei die physikalischen Eigenschaften und Stabilitäten der zu kombinierenden. Wirkstoffe zu berücksichtigen sind.
Als Kombinationspartner für die erfindungsgemäßen Wirkstoffe in Mischungsformulierungen oder im Tank-Mix sind beispielsweise bekannte, vorzugsweise herbizide Wirkstoffe, die auf einer Inhibition von beispielsweise Acetolactat-Synthase, Acetyl-Coenzym-A-Carboxylase, PS I, PS II, HPPDO, Phytoene-Desaturase, Protoporphyrinogen-Oxidase, Glutamine-Synthetase, Cellulosebiosynthese, 5-Enolpyruvylshikimat-3-phosphat-Synthetase beruhen, einsetzbar. Solche Verbindungen und auch andere einsetzbare Verbindungen mit teilweise unbekanntem oder anderem Wirkungsmechanismus sind z.B. in Weed Research 26, 441-445 (1986), oder in dem Handbuch "The Pesticide Manual", 12. Auflage 2000, oder 13. Auflage 2003 oder 14. Auflage 2006/2007, oder in dem entsprechenden "e-Pesticide Manual", Version 4 (2006), jeweils herausgegeben vom British Crop Protection Council, (im Folgenden auch kurz "PM"), und dort zitierter Literatur beschrieben. Listen von "Common names" sind auch in "The Compendium of Pesticide Common Names" im Internet verfügbar. Als literaturbekannte Herbizide und auch Safener, die mit den Verbindungen der Formel (I) kombiniert werden können, sind z.B. die Wirkstoffe aus der nachfolgenden Tabelle 1 zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):

**Tabelle 1: Wirkstoffe als Kombinationspartner zu Safenern (I)**

| |
|---|
| acetochlor; acibenzolar-S-methyl; acifluorfen(-sodium); aclonifen; AD-67; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim(-sodium); ametryn; amicarbazone, amidochlor, amidosulfuron; aminopyralid; amitrol; AMS, d.h. Ammoniumsulfamat; ancimidol; anilofos; asulam; atrazin; aviglycine; azafenidin, azimsulfuron (DPX-A8947); aziprotryn; barban; BAS 516 H, d.h. 5-Fluor-2-phenyl-4H-3,1-benzoxazin-4-on; beflubutamid (UBH-509), benazolin(-ethyl); bencarbazone; benfluralin; benfuresate; benoxacor; bensulfuron(-methyl); bensulide; bentazone; benzfendizone; benzobicyclon, benzofenap; benzofluor; benzoylprop(-ethyl); benzthiazuron; bialaphos; bifenox; bispyribac(-sodium) (KIH-2023); borax; bromacil; bromobutide; bromofenoxim; bromoxynil; bromuron; buminafos; busoxinone; butachlor; butafenacil, butamifos; butenachlor (KH-218); buthidazole; butralin; butroxydim, butylate; cafenstrole (CH-900); carbetamide; carfentrazone(-ethyl); CDAA, d.h. 2-Chlor-N,N-di-2-propenylacetamid; CDEC, d.h. Diethyldithiocarbaminsäure-2-chlorallylester; chlomethoxyfen; chloramben; chlorazifop-butyl, chlorbromuron; chlorbufam; chlorfenac; chlorfenprop; chlorflurecol(-methyl); chlorflurenol(-methyl); chloridazon; chlorimuron(-ethyl); chlormequat(-chloride); chlornitrofen; chlorophthalim (MK-616); chlorotoluron; chloroxuron; chlorpropham; chlorsulfuron; chlorthal-dimethyl; chlorthiamid; chlortoluron, cinidon(-methyl und -ethyl), cinmethylin; cinosulfuron; clefoxydim, clethodim; clodinafop und dessen Esterderivate (z.B. clodinafop-propargyl); clofencet; clomazone; clomeprop; cloprop; cloproxydim; clopyralid; clopyrasulfuron(-methyl), cloquintocet(-mexyl); cloransulam(-methyl), cumyluron (JC 940); cyanamide; cyanazine; cycloate; cyclosulfamuron (AC 104); cycloxydim; |
| cycluron; cyhalofop und dessen Esterderivate (z.B. Butylester, DEH-112); cyperquat; cyprazine; cyprazole; cyprosulfamide; daimuron; 2,4-D, 2,4-DB; dalapon; daminozide; dazomet; n-decanol; desmedipham; desmetryn; di-allate; dicamba; dichlobenil; dichlormid; dichlorprop(-P)-salze; diclofop und dessen Ester wie diclofop-methyl; diclofop-P(-methyl); diclosulam, diethatyl(-ethyl); difenoxuron; difenzoquat(-metilsulfate); diflufenican; diflufenzopyr(-sodium); dimefuron; dimepiperate, dimethachlor; dimethametryn; dimethazone; dimethenamid (SAN-582H); dimethenamide-P; dimethylarsinic acid; dimethipin; dimetrasulfuron, dinitramine; dinoseb; dinoterb; diphenamid; dipropetryn; diquat-salze; dithiopyr; diuron; DNOC; eglinazine-ethyl; EL 77, d.h. 5-Cyano-1-(1,1-dimethylethyl)-N-methyl-1H-pyrazole-4-carboxamid; endothal; epoprodan, EPTC; esprocarb; ethalfluralin; ethametsulfuron-methyl; ethephon; ethidimuron; ethiozin; ethofumesate; ethoxyfen und dessen Ester (z.B. Ethylester, HN-252); ethoxysulfuron, etobenzanid (HW 52); F5231, d.h. N-[2-Chlor-4-fluor-5-[4-(3-fluorpropyl)-4,5-dihydro-5-oxo-1H-tetrazol-1-yl]-phenyl]-ethansulfonamid; fenchlorazole(-ethyl); fenclorim; fenoprop; fenoxan, fenoxaprop und fenoxaprop-P sowie deren Ester, z.B. fenoxaprop-P-ethyl und fenoxaprop-ethyl; fenoxydim; fentrazamide, fenuron; ferrous sulfate; flamprop(-methyl oder -isopropyl oder -isopropyl-L); flamprop-M(-methyl oder -isopropyl); flazasulfuron; florasulam, fluazifop und fluazifop-P und deren Ester, z.B. fluazifop-butyl und fluazifop-P-butyl; fluazolate, flucarbazone(-sodium), flucetosulfuron; fluchloralin; flufenacet; flufenpyr(-ethyl); flumetralin; flumetsulam; flumeturon; flumiclorac(-pentyl), flumioxazin (S-482); flumipropyn; fluometuron, fluorochloridone, fluorodifen; fluoroglycofen(-ethyl); flupoxam (KNW-739); flupropacil (UBIC-4243); flupropanoate; flupyrsulfuron(-methyl)(-sodium); flurazole; flurenol(-butyl); fluridone; flurochloridone; fluroxypyr(-meptyl); flurprimidol, flurtamone; fluthiacet(-methyl) (KIH-9201); fluthiamide, fluxofenim; fomesafen; foramsulfuron, forchlorfenuron; fosamine; furilazole; furyloxyfen; gibberillic acid; glufosinate(-ammonium); glyphosate(-isopropylammonium); halosafen; halosulfuron(-methyl); haloxyfop und dessen Ester; haloxyfop-P (= R-haloxyfop) und dessen Ester; HC-252; hexazinone; imazamethabenz(-methyl); imazamethapyr, imazamox, imazapic, imazapyr; imazaquin und Salze wie das Ammoniumsalz; imazethamethapyr; imazethapyr; |
| imazosulfuron; inabenfide; indanofan; indol-3-acetic acid; 4-indol-3-ylbutyric acid; iodosulfuron-methyl(-sodium); ioxynil; isocarbamid; isopropalin; isoproturon; isouron; isoxaben; isoxachlortole, isoxadifen(-ethyl); isoxaflutole, isoxapyrifop; karbutilate; lactofen; lenacil; linuron; Maleinsäurehydrazid (MH), MCPA; MCPB; mecoprop(-P); mefenacet; mefenpyr(-diethyl); mefluidid; mepiquat(-chloride); mesosulfuron(-methyl); mesotrione, metam; metamifop; metamitron; metazachlor; methabenzthiazuron; metham; methazole; methoxyphenone; methylarsonic acid; methyl-cyclopropene; methyldymron; methylisothiocyanate; methabenzthiazuron; metobenzuron; metobromuron; (alpha-)metolachlor; metosulam (XRD 511); metoxuron; metribuzin; metsulfuron-methyl; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrophenolate mixture; nitrofluorfen; nonanoic acid; norflurazon; orbencarb; orthasulfamuron; oxabetrinil; oryzalin; oxadiargyl (RP-020630); oxadiazon; oxasulfuron, oxaziclomefone, oxyfluorfen; paclobutrazol; paraquat(-dichloride); pebulate; pelargonic acid, pendimethalin; penoxulam; pentachlorophenol; pentanochlor; pentoxazone, perfluidone; pethoxamid; phenisopham; phenmedipham; picloram; picolinafen, pinoxaden, piperophos; piributicarb; pirifenop-butyl; pretilachlor; primisulfuron(-methyl); probenazole; procarbazone-(sodium), procyazine; prodiamine; profluralin; profoxydim; prohexadione(-calcium); prohydrojasmon; proglinazine(-ethyl); prometon; prometryn; propachlor; propanil; propaquizafop; propazine; propham; propisochlor; propoxycarbazone(-sodium) (MKH-6561); n-propyl-dihydrojasmonate; propyzamide; prosulfalin; prosulfocarb; prosulfuron (CGA-152005); prynachlor; pyraclonil; pyraflufen(-ethyl) (ET-751); pyrasulfotole; pyrazolynate; pyrazon; pyrazosulfuron(-ethyl); pyrazoxyfen; pyribenzoxim, pyributicarb, pyridafol, pyridate; pyriftalid; pyriminobac(-methyl) (KIH-6127); pyrimisulfan (KIH-5996); pyrithiobac(-sodium) (KIH-2031); pyroxasulfone (KIH-485); pyroxofop und dessen Ester (z.B. Propargylester); pyroxulam; quinclorac; quinmerac; quinoclamine, quinofop und dessen Esterderivate, quizalofop und quizalofop-P und deren Esterderivate z.B. |
| quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; sintofen; SN 106279, d.h. 2-[[7-[2-Chlor-4-(trifluor-methyl)-phenoxy]-2-naphthalenyl]-oxy]-propansäure und -methylester; sulcotrione, sulfentrazone (FMC-97285, F-6285); sulfazuron; sulfometuron(-methyl); sulfosate (ICI-A0224); sulfosulfuron, TCA; tebutam (GCP-5544); tebuthiuron; tecnacene; tembotrione; tefuryltrione; tepraloxydim, terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiafluamide, thiazafluron; thiazopyr (Mon-13200); thidiazimin (SN-24085); thidiazuron; thiencarbazone; thifensulfuron(-methyl); thiobencarb; Ti 35; tiocarbazil; topramezone; tralkoxydim; tri-allate; triasulfuron; triaziflam, triazofenamide; tribenuron(-methyl); triclopyr; tridiphane; trietazine; trifloxysulfuron; trifluralin; triflusulfuron und Ester (z.B. Methylester; DPX-66037); trimeturon; trinexapac; tritosulfuron, tsitodef; uniconazole; vernolate; WL 110547, d.h. 5-Phenoxy-1-[3-(trifluormethyl)-phenyl]-1H-tetrazol; D-489; LS 82-556; KPP-300; NC-324; NC-330; DPX-N8189; SC-0774; DOWCO-535; DK-8910; V-53482; PP-600 und MBH-001. |

Insektizide, die allein oder gemeinsam mit Herbiziden Pflanzenschädigungen verursachen können, sind beispielsweise folgende:
Organophosphate z.B. Terbufos (Counter^{®}), Fonofos (Dyfonate^{®}), Phorate (Thimet^{®}), Chlorpyriphos (Reldan^{®}), Carbamate, wie Carbofuran (Furadan^{®}), Pyrethroid-Insektizide, wie Tefluthrin (Force^{®}), Deltamethrin (Decis^{®}) und Tralomethrin (Scout^{®}) sowie andere insektizide Mittel mit andersartigem Wirkmechanismus.

Herbizide, deren phytotoxische Nebenwirkungen auf Kulturpflanzen mittels Verbindungen der Formel (I) herabgesetzt werden können, sind z.B. Herbizide aus der Gruppe der Carbamate, Thiocarbamate, Halogenacetanilide, substituiert Phenoxy-, Naphthoxy- und Phenoxyphenoxycarbonsäure-Derivate sowie Heteroaryloxy-phenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionoxime, Benzoylcyclohexandione, Benzoylisoxazole, Benzoylpyrazole, lmidazolinone, Pyrimidinyloxy-pyridincarbonsäure-Derivate, Pyrimidyloxy-benzoesäure-Derivate, Sulfonylharnstoffe, Sulfonylaminocarbonyltriazolinone, Triazolo-pyrimidin-sulfonamid-Derivate, Phosphinsäurederivate und deren Salze, Glyzinderivate, Triazolinone, Triazinone sowie S-(N-Aryl-N-alkylcarbamoylmethyl)-dithiophosphorsäureester, Pyridincarbonsäuren, Pyridine, Pyridincarboxamide-1,3,5-Triazine, und weitere.

Bevorzugt sind dabei Phenoxyphenoxy- und Heteroaryloxyphenoxycarbonsäureester und -salze, Cyclohexandionoxime, Benzoylcyclohexandione, Benzoylisoxazole, Benzoylpyrazole, Sulfonylharnstoffe, Sulfonylaminocarbonyltriazolinone, Imidazolinone sowie Mischungen der genannten Wirkstoffe untereinander und/oder mit Wirkstoffen, die zur Erweiterung des Wirkungsspektrums der Herbizide eingesetzt werden, z.B. Bentazone, Cyanazine, Atrazine, Bromoxynil, Dicamba und andere Blattherbizide.

Geeignete Herbizide, die mit den erfindungsgemäßen Safenern kombiniert werden können, sind beispielsweise die aus der nachfolgenden Tabelle 2:

**Tabelle 2: Bevorzugte Kombinationspartner zu Safenern (I) (geordnet nach Strukturklassen)**

| |
|---|
| A) Herbizide vom Typ der Phenoxyphenoxy- und Heteroaryloxyphenoxycarbonsäure-Derivate, wie |
| A1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl), |
| 2-(4-(4-Brom-2-chlorphenoxy)phenoxy)propionsäuremethylester (DE-A 26 01 548), |
| 2-(4-(4-Brom-2-fluorphenoxy)phenoxy)propionsäuremethylester (US-A 4,808,750), |
| 2-(4-(2-Chlor-4-trifluormethylphenoxy)phenoxy)propionsäuremethylester (DE-A 24 33 067), |
| 2-(4-(2-Fluor-4-trifluormethylphenoxy)phenoxy)propionsäuremethylester (US-A4,808,750), |
| 2-(4-(2,4-Dichlorbenzyl)phenoxy)propionsäuremethylester (DE-A 24 17 487), |
| 4-(4-(4-Trifluormethylphenoxy)phenoxy)pent-2-en-säureethylester, |
| 2-(4-(4-Trifluormethylphenoxy)phenoxy)propionsäuremethylester (DE-A 24 33 067); |
| (*R*)-2-[4-(4-Cyano-2-fluorphenoxy)phenoxy]propionsäurebutylester (Cyhalofop-butyl) |
| |
| A2) "Einkernige" Heteroaryloxyphenoxy-alkancarbonsäure-Derivate, z.B. |
| 2-(4-(3,5-Dichlorpyridyl-2-oxy)phenoxy)propionsäureethylester (EP-A 0 002 925), |
| 2-(4-(3,5-Dichlorpyridyl-2-oxy)phenoxy)propionsäurepropargylester (EP-A 0 003 114), |
| (*RS*)- oder (*R*)-2-(4-(3-Chlor-5-trifluormethyl-2-pyridyloxy)phenoxy)propionsäure-methylester (Haloxyfop-methyl bzw. Haloxyfop-P-methyl), |
| 2-(4-(3-Chlor-5-trifluormethyl-2-pyridyloxy)phenoxy)propionsäureethylester (EP-A 0 003 890), |
| 2-(4-(5-Chlor-3-fluor-2-pyridyloxy)phenoxy)propionsäurepropargylester (Clodinafop-propargyl), |
| (*RS*)- oder (*R*)-2-(4-(5-Trifluormethyl-2-pyridyloxy)phenoxy)propionsäurebutylester (Fluazifop-butyl bzw. Fluazifop-P-butyl); |
| (*R*)-2-[4-(3-chloro-5-trifluoromethyl-2-pyridyloxy)phenoxy]propionic acid |
| |
| A3) "Zweikernige" Heteroaryloxyphenoxy-alkancarbonsäure-Derivate, z.B. |
| (*RS*)- oder (*R*)-2-(4-(6-Chlor-2-chinoxalyloxy)phenoxy)propionsäuremethylester und -ethylester (Quizalofop-methyl und -ethyl bzw. Quizalofop-P-methyl und -P-ethyl), |
| 2-(4-(6-Fluor-2-chinoxalyloxy)phenoxy)propionsäuremethylester (s. J. Pest. Sci. Vol. 10, 61 (1985)), |
| (*R*)-2-(4-(6-Chlor-2-chinoxalyloxy)phenoxy)propionsäure-2-isopropylidenaminooxyethylester (Propaquizafop), |
| (*RS*)- oder (*R*)-2-(4-(6-Chlorbenzoxazol-2-yl-oxy)phenoxy)propionsäureethylester (Fenoxaprop-ethyl bzw. Fenoxaprop-P-ethyl), |
| 2-(4-(6-Chlorbenzthiazol-2-yloxy)phenoxy)propionsäureethylester (DE-A-26 40 730), |
| (*RS*)- oder (*R*)-2-(4-(6-Chlorchinoxalyloxy)phenoxy)propionsäure-tetrahydro-2-furylmethylester (EP-A-0 323 727), |
| (R)-2-[4-(6-Chlor-1,3-benzoxazol-2-yloxy)phenoxy]-2'-fluor-N-methylpropionanilid (Metamifop); |
| |
| B) Herbizide aus der Reihe der Sulfonylharnstoffe, wie Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)-alkylamino-Teil sind Alkyl, Alkoxy, Halogen, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, (Alkansulfonyl)alkylamino. Solche geeignete Sulfonylharnstoffe sind beispielsweise |
| B1) Phenyl- und Benzylsulfonylharnstoffe und verwandte Verbindungen, z.B. |
| 1-(2-Chlorphenylsulfonyl)-3-(4-methoxy-6-methyl-1,3,5-triazin-2-yl)harnstoff (Chlorsulfuron), |
| 1-(2-Ethoxycarbonylphenylsulfonyl)-3-(4-chlor-6-methoxypyrimidin-2-yl)harnstoff (Chlorimuron-ethyl), |
| 1-(2-Methoxyphenylsulfonyl)-3-(4-methoxy-6-methyl-1,3,5-triazin-2-yl)harnstoff (Metsulfuron-methyl), |
| 1-(2-Chlorethoxyphenylsulfonyl)-3-(4-methoxy-6-methyl-1,3,5-triazin-2-yl)harnstoff (Triasulfuron), |
| 1-(2-Methoxycarbonylphenylsulfonyl)-3-(4,6-dimethylpyrimidin-2-yl)harnstoff (Sulfometuron-methyl), |
| 1-(2-Methoxycarbonylphenylsulfonyl)-3-(4-methoxy-6-methyl-1,3,5-triazin-2-yl)-3-methylharnstoff (Tribenuron-methyl), |
| 1-(2-Methoxycarbonylbenzylsulfonyl)-3-(4,6-dimethoxypyrimidin-2-yl)harnstoff (Bensulfuron-methyl), |
| 1-(2-Methoxycarbonylphenylsulfonyl)-3-(4,6-bis-(difluormethoxy)pyrimidin-2-yl)-harnstoff (Primisulfuron-methyl), |
| 3-(4-Ethyl-6-methoxy-1,3,5-triazin-2-yl)-1-(2,3-dihydro-1,1-dioxo-2-methylbenzo-[b]thiophen-7-sulfonyl)harnstoff (EP-A 0 796 83), |
| 3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683), |
| 3-(4-Methoxy-6-methyl-1,3,5-triazin-2-yl)-1-(2-methoxycarbonyl-5-jod-phenyl-sulfonyl)harnstoff (WO 92/13845), |
| 2-[4-Dimethylamino-6-(2,2,2-trifluoroethoxy)-1,3,5-triazin-2-ylcarbamoylsulfamoyl]-3-methyl-benzoesäuremethylester (DPX-66037, Triflusulfuron-methyl), |
| 2-[(4,6-dimethylpyrimidin-2-yl)-carbamoylsulfamoyl]benzoesäureoxetan-3-ylester (CGA-277476, Oxasulfuron), |
| 4-Iod-2-[3-(4-methoxy-6-methyl-1,3,5-triazin-2-yl)ureidosulfonyl]-benzoesäuremethylester, Natriumsalz (lodosulfuron-methyl-Natrium), |
| 2-[3-(4,6-dimethoxypyrimidin-2-yl)ureidosulfonyl]-4-methansulfonylamino-methyl-benzoesäuremethylester (Mesosulfuron-methyl, WO 95/10507), |
| N,N-Dimethyl-2-[3-(4,6-dimethoxypyrimidin-2-yl)ureidosulfonyl]-4-formylamino-benzamid (Foramsulfuron, WO 95/01344), |
| 1-(4,6-Dimethoxy-1,3,5-triazin-2-yl)-3-[2-(2-methoxyethoxy)phenylsulfonyl]harnstoff (Cinosulfuron), |
| 2-[(4-Ethoxy-6-methylamino-1,3,5-triazin-2-yl)carbamoylsulfamoyl]benzoesäure-methylester (Ethametsulfuron-methyl), |
| 1-(4-Methoxy-6-methyl-1,3,5-triazin-2-yl)-3-[2-(3,3,3-trifluoropropyl)phenylsulfonyl]-harnstoff (Prosulfuron), |
| 1-(4-Methoxy-6-trifluoromethyl-1,3,5-triazin-2-yl)-3-(2-trifluoromethylbenzolsulfonyl)-harnstoff (Tritosulfuron), |
| N-[(4-Methylpyrimidin-2-yl)carbamoyl]-2-nitrobenzolsulfonamid (Monosulfuron), |
| Methyl-2-[({[4-methoxy-6-(methylthio)pyrimidin-2-yl]carbamoyl}amino)sulfonyl]-benzoat, |
| |
| B2) Thienylsulfonylharnstoffe, z.B. |
| 1-(2-Methoxycarbonylthiophen-3-yl)-3-(4-methoxy-6-methyl-1,3,5-triazin-2-yl)harnstoff (Thifensulfuron-methyl); |
| |
| B3) Pyrazolylsulfonylharnstoffe, z.B. |
| 1-(4-Ethoxycarbonyl-1-methylpyrazol-5-yl-sulfonyl)-3-(4,6-dimethoxypyrimidin-2-yl)harnstoff (Pyrazosulfuron-ethyl), |
| 3-Chlor-5-(4,6-dimethoxypyrimidin-2-ylcarbamoylsulfamoyl)-1-methyl-pyrazol-4-carbonsäuremethylester (Halosulfuron-methyl), |
| 5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.), |
| 1-(4,6-Dimethoxypyrimidin-2-yl)-3-[1-methyl-4-(2-methyl-2*H*-tetrazol-5-yl)pyrazol-5-ylsulfonyl]harnstoff (DPX-A8947, Azimsulfuron), |
| N-[(4,6-Dimethoxypyrimidin-2-yl)carbamoyl]-4-(5,5-dimethyl-4,5-dihydroisoxazol-3-yl)-1,3-dimethyl-1H-pyrazol-5-sulfonamid; |
| |
| B4) Sulfondiamid-Derivate, z.B. |
| 3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990)); |
| |
| B5) Pyridylsulfonylharnstoffe, z.B. |
| 1-(3-N, N-Dimethylaminocarbonylpyridin-2-ylsulfonyl)-3-(4,6-dimethoxypyrimidin-2-yl)harnstoff (Nicosulfuron), |
| 1-(3-Ethylsulfonylpyridin-2-ylsulfonyl)-3-(4,6-dimethoxypyrimidin-2-yl)harnstoff(Rimsulfuron), |
| 2-[3-(4,6-Dimethoxypyrimidin-2-yl)ureidosulfonyl]-6-trifluormethyl-3-pyridin-carbonsäuremethylester, Natriumsalz (DPX-KE 459, Flupyrsulfuron-methyl-natrium), |
| 3-(4,6-Dimethoxypyrimidin-2-yl)-1-(3-N-methylsulfonyl-N-methyl-aminopyridin-2-yl)-sulfonylharnstoff oder dessen Salze (DE-A 40 00 503 und DE-A 40 30 577), |
| 1-(4,6-Dimethoxypyrimidin-2-yl)-3-(3-trifluoromethyl-2-pyridylsulfonyl)harnstoff (Flazasulfuron), |
| 1-(4,6-Dimethoxypyrimidin-2-yl)-3-[3-(2,2,2-trifluoroethoxy)-2-pyridylsulfonyl]harnstoff-Natriumsalz (Trifloxysulfuron-natrium), |
| (1*RS*,2*RS*;1*RS*,2*SR*)-1-{3-[(4,6-Dimethoxypyrimidin-2-ylcarbamoyl)sulfamoyl]-2-pyridyl}-2-fluorpropyl-methoxyacetate (Flucetosulfuron); |
| |
| B6) Alkoxyphenoxysulfonylharnstoffe, z. B. |
| 3-(4,6-Dimethoxypyrimidin-2-yl)-1-(2-ethoxyphenoxy)-sulfonylharnstoff oder dessen Salze (Ethoxysulfuron); |
| |
| B7) Imidazolylsulfonylharnstoffe, z.B. |
| 1-(4,6-Dimethoxypyrimidin-2-yl)-3-(2-ethylsulfonylimidazo[1,2-a]pyridin-3-yl)sulfonylharstoff (MON 37500, Sulfosulfuron), |
| 1-(2-Chloroimidazo[1,2-*a*]pyridin-3-ylsulfonyl)-3-(4,6-dimethoxypyrimidin-2-yl)harnstoff (Imazosulfuron), |
| 2-Chlor-N-[(4,6-dimethoxypyrimidin-2-yl)carbamoyl]-6-propylimidazo[1,2-b]pyridazin-3-sulfonamid; |
| |
| B8) Phenylaminosulfonylharnstoffe, z. B. |
| 1-[2-(Cyclopropylcarbonyl)phenylaminosulfonyl]-3-(4,6-dimethoxypyrimidin-2-yl)harnstoff (Cyclosulfamuron), |
| 1-(4,6-Dimethoxypyrimidin-2-yl)-3-[2-(dimethylcarbamoyl)phenylsulfamoyl]-harnstoff (Orthosulfamuron); |
| |
| C) Chloracetanilide, z.B. |
| Acetochlor, Alachlor, Butachlor, Dimethachlor, Dimethenamid, Dimethenamid-P; Metazachlor, Metolachlor, S-Metolachlor, Pethoxamid, Pretilachlor, Propachlor, Propisochlor und Thenylchlor; |
| |
| D) Thiocarbamate, z.B. |
| S-Ethyl-N,N-dipropylthiocarbamat (EPTC), |
| S-Ethyl-N,N-diisobutylthiocarbamat (Butylate), |
| Cycloate, Dimepiperate, Esprocarb, Molinate, Orbencarb, Pebulate, Prosulfocarb, Thiobencarb, Tiocarbazil, Tri-allate, Vernolate; |
| |
| E) Cyclohexandionoxime, z.B. |
| Alloxydim, Butroxydim, Clethodim, Cloproxydim, Cycloxydim, Profoxydim,Sethoxydim, Tepraloxydim und Tralkoxydim; |
| |
| F) Imidazolinone, z.B. |
| Imazamethabenz-methyl, lmazapic, Imazamox, Imazapyr, Imazaquin und Imazethapyr; |
| |
| G) Triazolopyrimidinsulfonamid-Derivate, z.B. |
| Chloransulam-methyl, Diclosulam, Florasulam, Flumetsulam, Metosulam und Penoxulam; Pyroxsulam; |
| |
| H) Benzoylcyclohexandione, z.B. |
| 2-(2-Chlor-4-methylsulfonylbenzoyl)-cyclohexan-1,3-dion (SC-0051, Sulcotrione), |
| 2-(2-Nitrobenzoyl)-4,4-dimethyl-cyclohexan-1,3-dion (EP-A 0 274 634), |
| 2-(2-Nitro-3-methylsulfonylbenzoyl)-4,4-dimethylcyclohexan-1,3-dion (WO 91/13548), |
| 2-[4-(Methylsulfonyl)-2-nitrobenzoyl]-1,3-cyclohexandion (Mesotrione), |
| 2-[2-Chlor-3-(5-cyanomethyl-4,5-dihydroisoxazol-3-yl)-4-(ethylsulfonyl)-benzoyl]-1,3-cyclohexandion, |
| 2-[2-Chlor-3-(5-cyanomethyl-4,5-dihydroisoxazol-3-yl)-4-(methylsulfonyl)-benzoyl]-1,3-cyclohexandion, |
| 2-[2-Chlor-3-(5-ethoxymethyl-4,5-dihydroisoxazol-3-yl)-4-(ethylsulfonyl)-benzoyl]-1,3-cyclohexandion, |
| 2-[2-Chlor-3-(5-ethoxymethyl-4,5-dihydroisoxazol-3-yl)-4-(methylsulfonyl)-benzoyl]-1,3-cyclohexandion, |
| 2-[2-Chlor-3-[(2,2,2-trifluorethoxy)methyl]-4-(ethylsulfonyl)-benzoyl]-1,3-cyclohexandion, |
| 2-[2-Chlor-3-[(2,2,2-trifluorethoxy)methyl]-4-(methylsulfonyl)-benzoyl]-1,3-cyclohexandion (Tembotrione), |
| 2-[2-Chlor-3-[(2,2-difluorethoxy)methyl]-4-(ethylsulfonyl)-benzoyl]-1,3-cyclohexandion, |
| 2-[2-Chlor-3-[(2,2-difluorethoxy)methyl]-4-(methylsulfonyl)-benzoyl]-1,3-cyclohexandion, |
| 2-[2-Chlor-3-[(2,2,3,3-tetrafluor-propoxy)methyl]-4-(ethylsulfonyl)-benzoyl]-1,3-cyclohexandion, |
| 2-[2-Chlor-3-[(2,2,3,3-tetrafluor-propoxy)methyl]-4-(methylsulfonyl)-benzoyl]-1,3-cyclohexandion, |
| 2-[2-Chlor-3-(cyclopropylmethoxy)-4-(ethylsulfonyl)-benzoyl]-1,3-cyclohexandion, |
| 2-[2-Chlor-3-(cyclopropylmethoxy)-4-(methylsulfonyl)-benzoyl]-1,3-cyclohexandion, |
| 2-[2-Chlor-3-(tetrahydrofuran-2-ylmethoxymethyl)-4-(ethylsulfonyl)-benzoyl]-1,3-cyclohexandion, |
| 2-[2-Chlor-3-(tetrahydrofuran-2-ylmethoxymethyl)-4-(methylsulfonyl)-benzoyl]-1,3-cyclohexandion (Tefuryltrione), |
| 2-[2-Chlor-3-[2-(2-methoxyethoxy)-ethoxymethyl]-4-(ethylsulfonyl)-benzoyl]-1,3-cyclohexandion, |
| 2-[2-Chlor-3-[2-(2-methoxyethoxy)-ethoxymethyl]-4-(methylsulfonyl)-benzoyl]-1,3-cyclohexandion, |
| 3-({2-[(2-methoxyethoxy)methyl]-6-(trifluoromethyl)pyridin-3-yl}carbonyl)-bicyclo[3.2.1]octane-2,4-dione (WO 2001094339); |
| |
| I) Benzoylisoxazole, z. B. |
| 5-Cyclopropyl-[2-(methylsulfonyl)-4-(trifluoromethyl)benzoyl]isoxazol (Isoxaflutole), |
| (4-Chlor-2-mesylphenyl)(5-cyclopropyl-1,2-oxazol-4-yl)methanon (Isoxachlortole); |
| |
| J) Benzoylpyrazole, z. B. |
| 2-[4-(2,4-Dichlor-*m*-toluoyl)-1,3-dimethylpyrazol-5-yloxy]-4'-methylacetophenon (Benzofenap), |
| 4-(2,4-Dichlorbenzoyl)-1,3-dimethylpyrazol-5-yl toluene-4-sulfonate (Pyrazolynate), |
| 2-[4-(2,4-Dichlorbenzoyl)-1,3-dimethylpyrazol-5-yloxy]acetophenone (Pyrazoxyfen); |
| 5-Hydroxy-1-methyl-4-[2-(methylsulfonyl)-4-trifluormethyl-benzoyl]-pyrazol (WO 01/74785), |
| 1-Ethyl-5-hydroxy-4-[2-(methylsulfonyl)-4-trifluormethyl-benzoyl]-pyrazol (WO 01/74785), |
| 1,3-Dimethyl-5-hydroxy-4-[2-(methylsulfonyl)-4-trifluormethyl-benzoyl]-pyrazol (WO 01/74785), |
| 1-Ethyl-5-hydroxy-3-methyl-4-[2-(methylsulfonyl)-4-trifluormethyl-benzoyl]-pyrazol (Pyrasulfotole, WO 01/74785), |
| 5-Hydroxy-1-methyl-4-[-2-chlor-3-(4,5-dihydroisoxazol-3-yl)-4-methylsulfonyl-benzoyl]-pyrazol (WO 99/58509), |
| 5-Hydroxy-1-methyl-4-[3-(4,5-dihydroisoxazol-3-yl)-2-methyl-4-methylsulfonyl-benzoyl]-pyrazol (Topramezone, WO 99/58509), |
| 1-Ethyl-5-hydroxy-3-methyl-4-[2-methyl-4-methylsulfonyl-3-(2-methoxy-ethylamino)-benzoyl]-pyrazol (WO 96/26206), |
| 3-Cyclopropyl-5-hydroxy-1-methyl-4-[2-methyl-4-methylsulfonyl-3-(2-methoxy-ethylamino)-benzoyl]-pyrazol (WO 96/26206), |
| 5-Benzoxy-1-ethyl-4-[2-methyl-4-methylsulfonyl-3-(2-methoxy-ethylamino)-benzoyl]-pyrazol (WO 96/26206), |
| 1-Ethyl-5-hydroxy-4-(3-dimethylamino-2-methyl-4-methylsulfonyl-benzoyl)-pyrazol (WO 96/26206), |
| 5-Hydroxy-1-methyl-4-(2-chlor-3-dimethylamino-4-methylsulfonyl-benzoyl)-pyrazol (WO 96/26206), |
| 1-Ethyl-5-hydroxy-4-(3-allylamino-2-chlor-4-methylsulfonyl-benzoyl)-pyrazol (WO 96/26206), |
| 1-Ethyl-5-hydroxy-4-(2-methyl-4-methylsulfonyl-3-morpholino-benzoyl)-pyrazol (WO 96/26206), |
| 5-Hydroxy-1-isopropyl-4-(2-chlor-4-methylsulfonyl-3-morpholino-benzoyl)-pyrazol (WO 96/26206), |
| 3-Cyclopropyl-5-hydroxy-1-methyl-4-(2-chlor-4-methylsulfonyl-3-morpholino-benzoyl)-pyrazol (WO 96/26206), |
| 1,3-Dimethyl-5-hydroxy-4-(2-chlor-4-methylsulfonyl-3-pyrazol-1-yl-benzoyl)-pyrazol (WO 96/26206), |
| 1-Ethyl-5-hydroxy-3-methyl-4-(2-chlor-4-methylsulfonyl-3-pyrazol-1-yl-benzoyl)-pyrazol (WO 96/26206), |
| 1-Ethyl-5-hydroxy-4-(2-chlor-4-methylsulfonyl-3-pyrazol-1-yl-benzoyl)-pyrazol (WO 96/26206), |
| (5-Hydroxy-1-methyl-1H-pyrazol-4-yl)(3,3,4-trimethyl-1,1-dioxido-2,3-dihydro-1-benzothien-5-yl)methanon (US2002/0016262), |
| 1-Methyl-4-[(3,3,4-trimethyl-1,1-dioxido-2,3-dihydro-1-benzothien-5-yl)carbonyl]-1H-pyrazol-5-yl-propan-1-sulfonat (US2002/0016262, WO 2002/015695); |
| 3-(2-Chlor-4-mesylbenzoyl)-2-phenylthiobicyclo[3.2.1]oct-2-en-4-on (Benzobicyclon); |
| |
| K) Sulfonylaminocarbonyltriazolinone, z. B. |
| 4,5-Dihydro-3-methoxy-4-methyl-5-oxo-N-(2-trifluoromethoxyphenylsulfonyl)-1*H*-1,2,4-triazole-1-carboxamide Natriumsalz (Flucarbazone-Natrium), |
| 2-(4,5-Dihydro-4-methyl-5-oxo-3-propoxy-1*H*-1,2,4-triazot-1-yl)-carboxamidosulfonylbenzoesäure-methylester-Natriumsalz (Propoxycarbazone-Na), |
| Methyl-4-[(4,5-dihydro-3-methoxy-4-methyl-5-oxo-1*H*-1,2,4-triazo)-1-yl)carbonyl-sulfamoyl]-5-methylthiophen-3-carboxylat (Thiencarbazone-methyl); |
| |
| L) Triazolinone, z. B. |
| 4-Amino-*N-tert*-butyl-4,5-dihydro-3-isopropyl-5-oxo-1,2,4-1*H*-triazole-1-carboxamid (Amicarbazone), |
| 2-(2,4-Dichlor-5-prop-2-ynyloxyphenyl)-5,6,7,8-tetrahydro-1,2,4-triazolo[4,3-a]pyridin-3(2*H*)-one (Azafenidin), |
| (*RS*)-2-Chlor-3-[2-chloro-5-(4-difluoromethyl-4,5-dihydro-3-methyl-5-oxo-1*H*-1,2,4-triazol-1-yl)-4-fluorophenyl]propionsäureethylester (Carfentrazone-ethyl), |
| 2',4'-Dichlor-5'-(4-difluormethyl-4,5-dihydro-3-methyl-5-oxo-1*H*-1,2,4-triazol-1-yl)-methanesulfonanilid (Sulfentrazone), |
| 4-[4,5-Dihydro-4-methyl-5-oxo-3-(trifluormethyl)-1*H*-1,2,4-triazol-1-yl]-2-[(ethylsulfonyl)amino]-5-fluorbenzolcarbothioamid (Bencarbazone); |
| |
| M) Phosphinsäuren und Derivate, z. B. |
| 4-[hydroxy(methyl)phosphinoyl]-L-homoalanyl-L-alanyl-L-alanin (Bilanafos), |
| DL-Homoalanin-4-yl(methyl)phosphinsäure-ammoniumsalz (Glufosinate-ammonium); |
| |
| N) Glyzinderivate, z. B. |
| *N*-(Phosphonomethyl)glyzin und dessen Salze (Glyphosate und Salze, z. B. dasNatriumsalz oder das Isoprepylammoniumsalz), |
| *N*-(Phosphonomethyl)glyzin-trimesiumsalz (Sulfosate); |
| |
| O) Pyrimidinyloxy-pyridincarbonsäure-Derivate; Pyrimidinyloxybenzoesäure-Derivate bzw. Pyrimidinylthiobenzoesäurederivate, z.B. |
| 3-(4,6-Dimethoxypyrimidin-2-yl)-oxy-pyridin-2-carbonsäurebenzyl-ester (EP-A 0 249 707), |
| 3-(4,6-Dimethoxypyrimidin-2-yl)-oxy-pyridin-2-carbonsäuremethylester (EP-A 0 249 707), |
| 2,6-Bis[(4,6-dimethoxypyrimidin-2-yl)-oxy]-benzoesäure-1-(ethoxycarbonyl-oxyethyl)-ester (EP-A 0 472 113), |
| 2,6-Bis[(4,6-dimethoxypyrimidin-2-yl)-oxy]-benzoesäure (Bispyribac-natrium), |
| Isopropyl-4-[[[2-[(4,6-dimethoxy-2-pyrimidinyl)oxy]phenyl]methyl]amino]benzoat (Pyribambenz-isopropyl, WO 2002034724), |
| Propyl-4-[[[2-[(4,6-dimethoxy-2-pyrimidinyl)oxy]phenyl]methyl]amino]benzoat (Pyribambenz-propyl, WO 2002034724), |
| Pyribenzoxim, Pyriftalid, Pyriminobac-methyl, Pyrithiobac-natrium, Pyrimisulfan; |
| |
| P) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos); |
| |
| Q) Triazinone, z. B. |
| 3-Cyclohexyl-6-dimethylamino-1-methyl-1,3,5-triazine-2,4-(1*H*,3*H*)-dion (Hexazinone), |
| 4-Amino-4,5-dihydro-3-methyl-6-phenyl-1,2,4-triazin-5-on (Metamitron), |
| 4-Amino-6-*tert*-butyl-4,5-dihydro-3-methylthio-1,2,4-triazin-5-on (Metribuzin); |
| |
| R) Pyridincarbonsäuren, z. B. |
| Aminopyralid, Clopyralid, Fluroxypyr, Picloram und Triclopyr; |
| |
| S) Pyridine, z. B. |
| Dithiopyr und Thiazopyr; |
| |
| T) Pyridincarboxamide, z. B. |
| Diflufenican und Picolinafen; |
| |
| U) 1,3,5-Triazine, z. B. |
| Ametryn, Atrazine, Cyanazine, Dimethametrin, Prometon, Prometryn, Propazine, Simazine, Symetryn, Terbumeton, Terbuthylazine, Terbutryn und Trietazine; |
| |
| V) Pflanzenwachstumsregulatoren, z. B. |
| Forchlorfenuron und Thidiazuron; |
| |
| W) Ketoenole, z. B. |
| 8-(2,6-diethyl-p-tolyl)-1,2,4,5-tetrahydro-7-oxo-7*H*-pyrazolo[1,2-d][1,4,5]oxadiazepin-9-yl 2,2-dimethylpropionate (Pinoxaden); |
| |
| X) Pyrazole, z. B. |
| 3-[5-(difluoromethoxy)-1-methyl-3-(trifluoromethyl)pyrazol-4-ylmethylsuffonyl]-4,5-dihydro-5,5-dimethyl-1,2-oxazole (Pyroxasulfone). |

Die Herbizide der Gruppen A bis X sind beispielsweise aus den oben jeweils genannten Schriften, aus "The Pesticide Manual", The British Crop Protection Council, 14th Edition, 2006, oder aus dem e-Pesticide Manual, Version 4.0, British Crop Protection Council 2006 oder auch aus dem "Compendium of Pesticide Common Names" bekannt.

Die vorstehend nach Strukturtypen aufgeführten Herbizide haben teilweise auch strukturübergreifende Gemeinsamkeiten hinsichtlich des Wirkungsmechanismus und weisen teilweise auch Ähnlichkeiten im Verhalten in den Kombinationen mit den Safenern (I) auf.

Geeignete Herbizide, die mit den erfindungsgemäßen Safenern kombiniert werden können, sind beispielsweise solche aus der Nachfolgenden Tabelle 3:

**Tabelle 3: Herbizidgruppen und Herbizide, geordnet nach wirkungsmechanistischen oder wirkungsphänomenologischen Gesichtspunkten**

| | |
|---|---|
| (1) | Herbizide, deren Schadwirkung sich über mehrere Tage oder Wochen entwickelt, beispielweise |
| (1.1) | Herbizide, welche die Entstehung von Chlorophyll behindern oder verhindern (Herbizide mit Bleichwirkung, "Bleacher"), beispielsweise |
| (1.1.1) | Inhibitoren der Hydroxyphenylpyruvatdioxygenase (HPPD-Inhibitoren), wie |
| (1.1.1.1) | 2-(2-Chlor-4-methylsulfonylbenzoyl)-cyclohexan-1,3-dion (SC-0051, Sulcotrione), |
| (1.1.1.2) | 2-(2-Nitrobenzoyl)-4,4-dimethyl-cyctohexan-1,3-dion (EP-A 0 274 634), |
| (1.1.1.3) | 2-(2-Nitro-3-methylsulfonylbenzoyl)-4,4-dimethylcyclohexan-1,3-dion (WO 91/13548), |
| (1.1.1.4) | 2-[4-(Methylsulfonyl)-2-nitrobenzoyl]-1,3-cyclohexandion (Mesotrione), |
| (1.1.1.5) | 2-[2-Chlor-3-(5-cyanomethyl-4,5-dihydroisoxazol-3-yl)-4-(ethylsulfonyl)-benzoyl]-1,3-cyclohexandion, |
| (1.1.1.6) | 2-[2-Chlor-3-(5-cyanomethyl-4,5-dihydroisoxazol-3-yl)-4-(methylsulfonyl)-benzoyl]-1,3-cyclohexandion, |
| (1.1.1.7) | 2-[2-Chlor-3-(5-ethoxymethyl-4,5-dihydroisoxazol-3-yl)-4-(ethylsulfonyl)-benzoyl]-1,3-cyclohexandion, |
| (1.1.1.8) | 2-[2-Chlor-3-(5-ethoxymethyl-4,5-dihydroisoxazol-3-yl)-4-(methylsulfonyl)-benzoyl]-1,3-cyclohexandion, |
| (1.1.1.9) | 2-[2-Chlor-3-[(2,2,2-trifluorethoxy)methyl]-4-(ethylsulfonyl)-benzoyl]-1,3-cyclohexandion, |
| (1.1.1.10) | 2-[2-Chlor-3-[(2,2,2-trifluorethoxy)methyl]-4-(methylsulfonyl)-benzoyl]-1,3-cyclohexandion (Tembotrione), |
| (1.1.1.11) | 2-[2-Chlor-3-[(2,2-difluorethoxy)methyl]-4-(ethylsulfonyl)-benzoyl]-1,3-cyclohexandion, |
| (1.1.1.12) | 2-[2-Chlor-3-[(2,2-difluorethoxy)methyl]-4-(methylsulfonyl)-benzoyl]-1,3-cyclohexandion, |
| (1.1.1.13) | 2-[2-Chlor-3-[(2,2,3,3-tetrafluor-propoxy)methyl]-4-(ethylsulfonyl)-benzoyl]-1,3-cyclohexandion, |
| (1.1.1.14) | 2-[2-Chlor-3-[(2,2,3,3-tetrafluor-propoxy)methyl]-4-(methylsulfonyl)-benzoyl]-1,3-cyclohexandion, |
| (1.1.1.15) | 2-[2-Chlor-3-(cyclopropylmethoxy)-4-(ethylsulfonyl)-benzoyl]-1,3-cyclohexandion, |
| (1.1.1.16) | 2-[2-Chlor-3-(cyclopropylmethoxy)-4-(methylsulfonyl)-benzoyl]-1,3-cyclohexandion, |
| (1.1.1.17) | 2-[2-Chlor-3-(tetrahydrofuran-2-ylmethoxymethyl)-4-(ethylsulfonyl)-benzoyl]-1,3-cyclohexandion, |
| (1.1.1.18) | 2-[2-Chlor-3-(tetrahydrofuran-2-ylmethoxymethyl)-4-(methylsulfonyl)-benzoyl]-1,3-cyclohexandion (Tefuryltrione), |
| (1.1.1.19) | 2-[2-Chlor-3-[2-(2-methoxyethoxy)-ethoxymethyl]-4-(ethylsulfonyl)-benzoyl]-1,3-cyclohexandion, |
| (1.1.1.20) | 2-[2-Chlor-3-[2-(2-methoxyethoxy)-ethoxymethyl]-4-(methylsulfonyl)-benzoyl]-1,3-cyclohexandion, |
| (1.1.1.21) | 3-({2-[(2-methoxyethoxy)methyl]-6-(trifluoromethyl)pyridin-3-yl}carbonyl)-bicyclo[3.2.1]octane-2,4-dione (WO 2001094339) |
| (1.1.1.22) | 5-Cyclopropyl-[2-(methylsulfonyl)-4-(trifluoromethyl)benzoyl]-isoxazol (Isoxaflutole); |
| (1.1.1.23) | 2-[4-(2,4-Dichlor-*m*-toluoyl)-1,3-dimethylpyrazol-5-yloxy]-4'-methylacetophenon (Benzofenap), |
| (1.1.1.24) | 4-(2,4-Dichlorbenzoyl)-1,3-dimethylpyrazol-5-yl toluene-4-sulfonate (Pyrazolynate), |
| (1.1.1.25) | 2-[4-(2,4-Dichlorbenzoyl)-1,3-dimethylpyrazol-5-yloxy]acetophenone (Pyrazoxyfen); |
| (1.1.1.26) | 5-Hydroxy-1-methyl-4-[2-(methylsulfonyl)-4-trifluormethyl-benzoyl]-pyrazol (WO 01/74785), |
| (1.1.1.27) | 1-Ethyl-5-hydroxy-4-[2-(methylsulfonyl)-4-trifluormethyl-benzoyl]-pyrazol (WO 01/74785), |
| (1.1.1.28) | 1,3-Dimethyl-5-hydroxy-4-[2-(methylsulfonyl)-4-trifluormethyl-benzoyl]pyrazol (WO 01/74785), |
| (1.1.1.29) | 1-Ethyl-5-hydroxy-3-methyl-4-[2-(methylsulfonyl)-4-trifluormethyl-benzoyl]pyrazol (Pyrasulfotole, WO 01/74785), |
| (1.1.1.30) | 5-Hydroxy-1-methyl-4-[-2-chlor-3-(4,5-dihydroisoxazol-3-yl)-4-methylsulfonyl-benzoyl]pyrazol (WO 99/58509), |
| (1.1.1.31) | 5-Hydroxy-1-methyl-4-[3-(4,5-dihydroisoxazol-3-yl)-2-methyl-4-methylsulfonyl-benzoyl]pyrazol (WO 99/58509), |
| (1.1.1.32) | 1-Ethyl-5-hydroxy-3-methyl-4-[2-methyl-4-methylsulfonyl-3-(2-methoxy-ethylamino)-benzoyl] pyrazol (Topramezone, WO 96/26206), |
| (1.1.1.33) | 3-Cyclopropyl-5-hydroxy-1-methyl-4-[2-methyl-4-methylsulfonyl-3-(2-methoxy-ethylamino)-benzoyl]pyrazol (WO 96/26206), |
| (1.1.1.34) | 5-Benzoxy-1-ethyl-4-[2-methyl-4-methylsulfonyl-3-(2-methoxy-ethylamino)-benzoyl]-pyrazol (WO 96/26206), |
| (1.1.1.35) | 1-Ethyl-5-hydroxy-4-(3-dimethylamino-2-methyl-4-methylsulfonyl-benzoyl)pyrazol (WO 96/26206), |
| (1.1.1.36) | 5-Hydroxy-1-methyl-4-(2-chlor-3-dimethylamino-4-methylsulfonyl-benzoyl)pyrazol (WO 96/26206), |
| (1.1.1.37) | 1-Ethyl-5-hydroxy-4-(3-allylamino-2-chlor-4-methylsulfonyl-benzoyl)-pyrazol (WO 96/26206), |
| (1.1.1.38) | 1-Ethyl-5-hydroxy-4-(2-methyl-4-methylsulfonyl-3-morpholino-benzoyl)-pyrazol (WO 96/26206), |
| (1.1.1.39) | 5-Hydroxy-1-isopropyl-4-(2-chlor-4-methylsulfonyl-3-morpholino-benzoyl)-pyrazol (WO 96/26206), |
| (1.1.1.40) | 3-Cyclopropyl-5-hydroxy-1-methyl-4-(2-chlor-4-methylsulfonyl-3-morpholino-benzoyl)-pyrazol (WO 96/26206), |
| (1.1.1.41) | 1,3-Dimethyl-5-hydroxy-4-(2-chlor-4-methylsulfonyl-3-pyrazol-1-yl-benzoyl)-pyrazol (WO 96/26206), |
| (1.1.1.42) | 1-Ethyl-5-hydroxy-3-methyl-4-(2-chlor-4-methylsulfonyl-3-pyrazol-1-yl-benzoyl)-pyrazol (WO 96/26206), |
| (1.1.1.43) | 1-Ethyl-5-hydroxy-4-(2-chlor-4-methylsulfonyl-3-pyrazol-1-yl-benzoyl)-pyrazol (WO 96/26206), |
| (1.1.1.44) | (5-Hydroxy-1-methyl-1H-pyrazol-4-yl)(3,3,4-trimethyl-1,1-dioxido-2,3-dihydro-1-benzothien-5-yl)methanon (US2002/0016262), |
| (1.1.1.45) | 1-Methyl-4-[(3,3,4-trimethyl-1,1-dioxido-2,3-dihydro-1-benzothien-5-yl)carbonyl]-1H-pyrazol-5-yl-propan-1-sulfonat (US2002/0016262, WO2002/015695); |
| | |
| (1.1.1.46) | benzobicyclon und |
| (1.1.1.47) | isoxachlortol, |
| | |
| (1.1.2) | Inhibitoren der Carotenoid-Biosynthese, inklusive Phytoene-Desaturase-Inhibitoren, wie z. B. |
| (1.1.2.1) | norflurazon, |
| (1.1.2.2) | beflubutamide, |
| (1.1.2.3) | fluridone, |
| (1.1.2.4) | flurochloridone, |
| (1.1.2.5) | flurtamone, |
| (1.1.2.6) | amitrole, |
| (1.1.2.7) | clomazone, |
| (1.1.2.8) | aclonifen, |
| (1.1.2.9) | Diflufenican und |
| (1.1.2.10) | Picolinafen, |
| | |
| (1.1.3) | Inhibitoren der Dihydropteroat-Synthase (DHP-Synthase), wie z. B. |
| (1.1.3.1) | asulam, |
| | |
| (1.2) | Herbizide, welche mit der Aminosäuresynthese interferieren, wie z. B. |
| (1.2.1) | Inhibitoren der Acetolactatsynthase in Pflanzen, wie z. B. |
| (1.2.1.1) | 1-(2-Chlorphenylsulfonyl)-3-(4-methoxy-6-methyl-1,3,5-triazin-2-yl)harnstoff (Chlorsulfuron), |
| (1.2.1.2) | 1-(2-Ethoxycarbonylphenylsulfonyl)-3-(4-chlor-6-methoxypyrimidin-2-yl)harnstoff (Chlorimuron-ethyl), |
| (1.2.1.3) | 1-(2-Methoxyphenylsulfonyl)-3-(4-methoxy-6-methyl-1,3,5-triazin-2-yl)harnstoff (Metsulfuron-methyl), |
| (1.2.1.4) | 1-(2-Chlorethoxyphenylsulfonyl)-3-(4-methoxy-6-methyl-1,3,5-triazin-2-yl)harn-stoff (Triasulfuron), |
| (1.2.1.5) | 1-(2-Methoxycarbonylphenylsulfonyl)-3-(4,6-dimethylpyrimidin-2-yl)harnstoff (Sulfometuron-methyl), |
| (1.2.1.6) | 1-(2-Methoxycarbonylphenylsulfonyl)-3-(4-methoxy-6-methyl-1,3,5-triazin-2-yl)-3-methylharnstoff (Tribenuron-methyl), |
| (1.2.1.7) | 1-(2-Methoxycarbonylbenzylsulfonyl)-3-(4,6-dimethoxypyrimidin-2-yl)harnstoff (Bensulfuron-methyl), |
| (1.2.1.8) | 1-(2-Methoxycarbonylphenylsulfonyl)-3-(4,6-bis-(difluormethoxy)pyrimidin-2-yl)-harnstoff (Primisulfuron-methyl), |
| (1.2.1.9) | 3-(4-Ethyl-6-methoxy-1,3,5-triazin-2-yl)-1-(2,3-dihydro-1,1-dioxo-2-methylbenzo-[b]thiophen-7-sulfonyl)harnstoff (EP-A 0 796 83), |
| (1.2.1.10) | 3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683), |
| (1.2.1.11) | 3-(4-Methoxy-6-methyl-1,3,5-triazin-2-yl)-1-(2-methoxycarbonyl-5-jod-phenyl-sulfonyl)-harnstoff (WO 92/13845), |
| (1.2.1.11a) | ein in der Landwirtschaft einsetzbares Salz der Verbindung (1.2.1.11), |
| (1.2.1.11b) | das Natriumsalz der Verbindung (1.2.1.11), d. h. 4-lod-2-[3-(4-methoxy-6-methyl-1,3,5-triazin-2-yl)ureidosulfonyl]-benzoesäuremethylester, Natriumsalz (lodosulfuron-methyl-Natrium), |
| (1.2.1.12) | 2-[4-Dimethylamino-6-(2,2,2-trifluoroethoxy)-1,3,5-triazin-2-ylcarbamoylsulfamoyl]-3-methyl-benzoesäuremethylester (DPX-66037, Triflusulfuron-methyl), |
| (1.2.1.13) | 2-[(4,6-dimethylpyrimidin-2-yl)-carbamoylsulfamoyl]benzoesäureoxetan-3-ylester (CGA-277476, Oxasulfuron), |
| (1.2.1.14) | 2-[3-(4,6-dimethoxypyrimidin-2-yl)ureidosulfonyl]-4-methansulfonylamino-methyl-benzoesäuremethylester (Mesosulfuron-methyl, WO 95/10507), |
| (1.2.1.14a) | ein in der Landwirtschaft einsetzbares Salz der Verbindung (1.2.1.14), |
| (1.2.1.14b) | das Natriumsalz der Verbindung (1.2.1.14), |
| (1.2.1.15) | N,N-Dimethyl-2-[3-(4,6-dimethoxypyrimidin-2-yl)ureidosulfonyl]-4-formylamino-benzamid (Foramsulfuron), WO 95/01344), |
| (1.2.1.15a) | ein in der Landwirtschaft einsetzbares Salz der Verbindung (1.2.1.15), |
| (1.2.1.15b) | das Natriumsalz der Verbindung (1.2.1.15), |
| (1.2.1.16) | 1-(4,6-Dimethoxy-1,3,5-triazin-2-yl)-3-[2-(2-methoxyethoxy)phenylsulfonyl]harnstoff (Cinosulfuron), |
| (1.2.1.17) | 2-[(4-Ethoxy-6-methylamino-1,3,5-triazin-2-yl)-carbamoylsulfamoyl]-benzoesäure-methylester (Ethametsulfuron-methyl), |
| (1.2.1.18) | 1-(4-Methoxy-6-methyl-1,3,5-triazin-2-yl)-3-[2-(3,3,3-trifluoropropyl)-phenylsulfonyl]-harnstoff (Prosulfuron), |
| (1.2.1.19) | 2-(4,6-Dimethylpyrimidin-2-ylcarbamoylsulfamoyl)-benzoesäuremethylester (Sulfometuron-methyl), |
| (1.2.1.20) | 1-(4-Methoxy-6-trifluoromethyl-1,3,5-triazin-2-yl)-3-(2-trifluoromethylbenzolsulfonyl)-harnstoff (Tritosulfuron), |
| (1.2.1.21) | N-[(4-Methylpyrimidin-2-yl)carbamoyl]-2-nitrobenzolsulfonamid (Monosulfuron), |
| (1.2.1.22) | Methyl-2-[({[4-methoxy-6-(methylthio)pyrimidin-2-yl]carbamoyl}amino)-sulfonyl]-benzoat, |
| (1.2.1.23) | 1-(2-Methoxycarbonylthiophen-3-yl)-3-(4-methoxy-6-methyl-1,3,5-triazin-2-yl)-harnstoff (Thifensulfuron-methyl), |
| (1.2.1.24) | 1-(4-Ethoxycarbonyl-1-methylpyrazol-5-yl-sulfonyl)-3-(4,6-dimethoxypyrimidin-2-yl)harnstoff (Pyrazosulfuron-ethyl), |
| (1.2.1.25) | 3-Chlor-5-(4,6-dimethoxypyrimidin-2-ylcarbamoylsulfamoyl)-1-methyl-pyrazol-4-carbonsäuremethylester (Halosulfuron-methyl), |
| (1.2.1.26) | 5-(4,6-Dimethylpyrimidin-2-yl-carbamoylsulfamoyl)-1-(2-pyridyl)-pyrazol-4-car-bonsäuremethylester (NC-330, s. Brighton Crop Prot. Conference 'Weeds' 1991, Vol. 1, S. 45 ff.), |
| (1.2.1.27) | 1-(4,6-Dimethoxypyrimidin-2-yl)-3-[1-methyl-4-(2-methyl-2*H*-tetrazol-5-yl)pyrazol-5-ylsulfonyl]harnstoff (DPX-A8947, Azimsulfuron), |
| (1.2.1.28) | N-[(4,6-Dimethoxypyrimidin-2-yl)carbamoyl]-4-(5,5-dimethyl-4,5-dihydroisoxazol-3-yl)-1,3-dimethyl-1H-pyrazol-5-sulfonamid, |
| (1.2.1.29) | 3-(4,6-Dimethoxypyrimidin-2-yl)-1-(N-methyl-N-methylsulfonylaminosulfonyl)-harnstoff (Amidosulfuron), |
| (1.2.1.29a) | ein in der Landwirtschaft einsetzbares Salz der Verbindung (1.2.1.29), |
| (1.2.1.29b) | das Natriumsalz der Verbindung (1.2.1.29), |
| (1.2.1.29c) | Strukturanaloge zu Amidosulfuron gemäß EP-A 0 131 258 und Z. Pfl. Krankh. Pfl. Schutz, Sonderheft XII, 489-497 (1990), |
| (1.2.1.30) | 1-(3-N,N-Dimethylaminocarbonylpyridin-2-ylsulfonyl)-3-(4,6-dimethoxypyrimidin-2-yl)harnstoff (Nicosulfuron), |
| (1.2.1.31) | 1-(3-Ethylsulfonylpyridin-2-ylsulfonyl)-3-(4,6-dimethoxypyrimidin-2-yl)harnstoff (Rimsulfuron), |
| (1.2.1.32) | 2-[3-(4,6-Dimethoxypyrimidin-2-yl)ureidosulfonyl]-6-trifluormethyl-3-pyridin-carbonsäuremethylester, Natriumsalz (DPX-KE 459, Flupyrsulfuron-methyl-natrium), |
| (1.2.1.33) | 3-(4,6-Dimethoxypyrimidin-2-yl)-1-(3-N-methylsulfonyl-N-methyl-aminopyridin-2-yl)-sulfonylharnstoff (DE-A 40 00 503 und DE-A 40 30 577), |
| (1.2.1.33a) | ein in der Landwirtschaft einsetzbares Salz der Verbindung (1.2.1.33), |
| (1.2.1.33b) | das Natriumsalz der Verbindung (1.2.1.33), |
| (1.2.1.34) | 1-(4,6-Dimethoxypyrimidin-2-yl)-3-(3-trifluoromethyl-2-pyridylsulfonyl)-harnstoff (Flazasulfuron), |
| (1.2.1.35) | 1-(4,6-Dimethoxypyrimidin-2-yl)-3-[3-(2,2,2-trifluoroethoxy)-2-pyridylsulfonyl]harnstoff-Natriumsalz (Trifloxysulfuron-natrium), |
| (1.2.1.36) | (1*RS*,2*RS*;1*RS*,2*SR*)-1-{3-[(4,6-Dimethoxypyrimidin-2-ylcarbamoyl)-sulfamoyl]-2-pyridyl}-2-fluorpropyl-methoxyacetate (Flucetosulfuron), |
| (1.2.1.37) | 3-(4,6-Dimethoxypyrimidin-2-yl)-1-(2-ethoxyphenoxy)-sulfonylharnstoff (Ethoxysulfuron), |
| (1.2.1.37a) | ein in der Landwirtschaft einsetzbares Salz der Verbindung (1.2.1.37), |
| (1.2.1.37b) | das Natriumsalz der Verbindung (1.2.1.37), |
| (1.2.1.38) | 1-(4,6-Dimethoxypyrimidin-2-yl)-3-(2-ethylsulfonylimidazo[1,2-a]pyridin-3-yl)sulfonylharstoff (MON 37500, Sulfosulfuron), |
| (1.2.1.39) | 1-(2-Chloroimidazo[1,2-a]pyridin-3-ylsulfonyl)-3-(4,6-dimethoxypyrimidin-2-yl)harnstoff (Imazosulfuron), |
| (1.2.1.40) | 2-Chlor-N-[(4,6-dimethoxypyrimidin-2-yl)carbamoyl]-6-propylimidazo[1,2-b]pyridazin-3-sulfonamid, |
| (1.2.1.41) | 1-[2-(Cyclopropylcarbonyl)phenylaminosulfonyl]-3-(4,6-dimethoxypyrimidin-2-yl)harnstoff (Cyclosulfamuron), |
| (1.2.1.42) | 1-(4,6-Dimethoxypyrimidin-2-yl)-3-[2-(dimethylcarbamoyl)phenylsulfamoyl]-harnstoff (Orthosulfamuron), |
| (1.2.1.43) | Imazamethabenz-methyl, |
| (1.2.1.44) | Imazapic, |
| (1.2.1.45) | Imazamox, |
| (1.2.1.46) | Imazapyr, |
| (1.2.1.47) | Imazaquin und |
| (1.2.1.48) | Imazethapyr; |
| (1.2.1.49) | Chloransulam-methyl, |
| (1.2.1.50) | Diclosulam, |
| (1.2.1.51) | Florasulam, |
| (1.2.1.52) | Flumetsulam, |
| (1.2.1.53) | Metosulam, |
| (1.2.1.54) | Penoxulam, |
| (1.2.1.55) | Pyroxsulam; |
| (1.2.1.56) | 4,5-Dihydro-3-methoxy-4-methyl-5-oxo-N-(2-trifluoromethoxyphenylsulfonyl)-1H-1,2,4-triazole-1-carboxamid |
| (1.2.1.56a) | ein in der Landwirtschaft einsetzbares Salz der Verbindung (1.2.1.56), |
| (1.2.1.56b) | das Natriumsalz der Verbindung (1.2.1.56), d. h. Flucarbazone-Natrium, |
| (1.2.1.57) | 2-(4,5-Dihydro-4-methyl-5-oxo-3-propoxy-1H-1,2,4-triazol-1-yl)-carboxamidosulfonylbenzoesäure-methylester |
| (1.2.1.57a) | ein in der Landwirtschaft einsetzbares Salz der Verbindung (1.2.1.57), |
| (1.2.1.57b) | das Natriumsalz der Verbindung (1.2.1.57), d. h. Propoxycarbazone-Natrium, |
| (1.2.1.58) | Methyl-4-[(4,5-dihydro-3-methoxy-4-methyl-5-oxo-1H-1,2,4-triazol-1-yl)carbonyl-sulfamoyl]-5-methylthiophen-3-carboxylat (Thiencarbazone-methyl); |
| (1.2.1.59) | 3-(4,6-Dimethoxypyrimidin-2-yl)-oxy-pyridin-2-carbonsäurebenzyl-ester (EP-A 0 249 707), |
| (1.2.1.60) | 3-(4,6-Dimethoxypyrimidin-2-yl)-oxy-pyridin-2-carbonsäuremethylester(EP-A 0 249 707), |
| (1.2.1.61) | 2,6-Bis[(4,6-dimethoxypyrimidin-2-yl)-oxy]-benzoesäure-1-(ethoxycarbonyl-oxyethyl)-ester (EP-A 0 472 113), |
| (1.2.1.62) | 2,6-Bis[(4,6-dimethoxypyrimidin-2-yl)-oxy]-benzoesäure |
| (1.2.1.62a) | ein in der Landwirtschaft einsetzbares Salz der Verbindung (1.2.1.62), |
| (1.2.1.62b) | das Natriumsalz der Verbindung (1.2.1.62), d. h. Bispyribac-natrium, |
| (1.2.1.63) | Isopropyl-4-[[[2-[(4,6-dimethoxy-2-pyrimidinyl)-oxy]-phenyl]-methyl]-amino]-benzoat (Pyribambenz-isopropyl, WO 2002034724), |
| (1.2.1.64) | Propyl-4-[[[2-[(4,6-dimethoxy-2-pyrimidinyl)-oxy]-phenyl]-methyl]-amino]-benzoat (Pyribambenz-propyl, WO 2002034724), |
| (1.2.1.65) | Pyribenzoxim, |
| (1.2.1.66) | Pyriftalid, |
| (1.2.1.67) | Pyriminobac-methyl, |
| (1.2.1.68) | 2-Chlor-6-(4,6-dimethoxypyrimidin-2-ylthio)benzoesäure, |
| (1.2.1.68a) | ein in der Landwirtschaft einsetzbares Salz der Verbindung (1.2.1.68), |
| (1.2.1.68b) | das Natriumsalz der Verbindung (1.2.1.62), d. h. Pyrithiobac-natrium, und |
| (1.2.1.69) | Pyrimisulfan; |
| | |
| (1.2.2) | Inhibitoren der EPSP synthase, wie beispielsweise |
| (1.2.2.1) | N-(Phosphonomethyl)glyzin (Glyphosate), |
| (1.2.2.1a) | ein in der Landwirtschaft einsetzbares Salz der Verbindung (1.2.2.1), |
| (1.2.1.1b) | das Natriumsalz der Verbindung (1.2.2.1), (Glyphosate-Natrium) |
| (1.2.1.1c) | das Isopropylammoniumsalz der Verbindung (1.2.2.1), (Glyphosate-Isopropylammonium) |
| (1.2.2.2) | N-(Phosphonomethyl)glyzin-trimesiumsalz (Sulfosate); |
| | |
| (1.2.3) | Inhibitoren der Glutamin-Synthetase, wie beispielsweise |
| (1.2.3.1) | 4-[Hydroxy(methyl)phosphinoyl]-L-homoalanyl-L-alanyl-L-alanin (bialaphos = Bilanafos), |
| (1.2.3.2) | DL-Homoalanin-4-yl(methyl)phosphinsäure (Glufosinate) |
| (1.2.3.1a) | ein in der Landwirtschaft einsetzbares Salz der Verbindung (1.2.3.1), |
| (1.2.3.1b) | das Natriumsalz der Verbindung (1.2.2.1), |
| (1.2.3.1c) | das Ammoniumsalz der Verbindung (1.2.3.1), (Glufosinate-ammonium) |
| | |
| (1.3) | Inhibitoren der Lipidsynthese in Pflanzen, wie beispielsweise |
| (1.3.1) | Inhibitoren der Acetyl-Coenzym A-Carboxylase (ACCase) beispielsweise |
| (1.3.1.1) | 2-(4-(2,4-Dichlorphenoxy)-phenoxy)-propionsäuremethylester (Diclofop-methyl), |
| (1.3.1.1a) | (R)-2-(4-(2,4-Dichlorphenoxy)-phenoxy)-propionsäuremethylester (Diclofop-P-methyl), |
| (1.3.1.2) | 2-(4-(4-Brom-2-chlorphenoxy)phenoxy)propionsäuremethylester (DE-A 26 01 548), |
| (1.3.1.3) | 2-(4-(4-Brom-2-fluorphenoxy)phenoxy)propionsäuremethylester (US-A 4,808,750), |
| (1.3.1.4) | 2-(4-(2-Chlor-4-trifluormethylphenoxy)-phenoxy)-propionsäuremethylester (DE-A 24 33 067), |
| (1.3.1.5) | 2-(4-(2-Fluor-4-trifluormethylphenoxy)-phenoxy)-propionsäuremethylester (US-A 4,808,750), |
| (1.3.1.6) | 2-(4-(2,4-Dichlorbenzyl)phenoxy)propionsäuremethylester (DE-A 24 17 487), |
| (1.3.1.7) | 4-(4-(4-Trifluormethylphenoxy)phenoxy)pent-2-en-säureethylester, |
| (1.3.1.8) | 2-(4-(4-Trifluormethylphenoxy)phenoxy)propionsäuremethylester (DE-A 24 33 067); |
| (1.3.1.9) | (R)-2-[4-(4-Cyano-2-fluorphenoxy)phenoxy]propionsäurebutylester (Cyhalofop-butyl) |
| (1.3.1.10) | 2-(4-(3,5-Dichlorpyridyl-2-oxy)phenoxy)propionsäureethylester (EP-A 0 002 925), |
| (1.3.1.11) | 2-(4-(3,5-Dichlorpyridyl-2-oxy)phenoxy)propionsäurepropargylester (EP-A 0 003 114), |
| (1.3.1.12) | (RS)-2-(4-(3-Chlor-5-trifluormethyl-2-pyridyloxy)-phenoxy)-propionsäure (Haloxyfop), |
| (1.3.1.12a) | Methylester von (1.3.1.12), d. h. (Haloxyfop-methyl), |
| (1.3.1.12b) | Etotylester (= Ethoxyethylester) von (1.3.1.12), d. h. (Haloxyfop-etotyl), |
| (1.3.1.12c) | Natriumsalz von (1.3.1.12), d. h. (Haloxyfop-Na), |
| (1.3.1.12d) | (R)-2-(4-(3-Chlor-5-trifluormethyl-2-pyridyloxy)-phenoxy)-propionsäure (Haloxyfop-P), |
| (1.3.1.12e) | Methylester von (1.3.1.12d), d. h. (Haloxyfop-P-methyl) |
| (1.3.1.12f) | Etotylester (= Ethoxyethylester) von (1.3.1.12d), d. h. (Haloxyfop-P-etotyl), |
| (1.3.1.12g) | Natriumsalz von (1.3.1.12d), d. h. (Haloxyfop-P-Na), |
| (1.3.1.13) | 2-(4-(3-Chlor-5-trifluormethyl-2-pyridyloxy)-phenoxy)-propionsäureethylester (EP-A 0 003 890), |
| (1.3.1.14) | 2-(4-(5-Chlor-3-fluor-2-pyridyloxy)phenoxy)propionsäurepropargylester (Clodinafop-propargyl), |
| (1.3.1.15) | (RS)-2-(4-(5-Trifluormethyl-2-pyridyloxy)-phenoxy)-propionsäurebutylester (Fluazifop-butyl), |
| (1.3.1.15a) | (R)-2-(4-(5-Trifluormethyl-2-pyridyloxy)-phenoxy)-propionsäurebutylester (Fluazifop-P-butyl); |
| (1.3.1.16) | (R)-2-[4-(3-chlor-5-trifluormethyl-2-pyridyloxy)phenoxy]propionsäure, |
| (1.3.1.17) | (RS)-2-(4-(6-Chlor-2-chinoxalyloxy)-phenoxy)-propionsäure, (Quizalofop), |
| (1.3.1.17a) | (R)-2-(4-(6-Chlor-2-chinoxalyloxy)-phenoxy)-propionsäure (Quizalofop-P), |
| (1.3.1.17b) | Ethylester von (1.3.1.17) (Quizalofop-ethyl), |
| (1.3.1.17c) | Methylester von (1.3.1.17) (Quizalofop-methyl), |
| (1.3.1.17d) | Tetrahydrofurfurylester von (1.3.1.17) (Quizalofop-tefuryl), |
| (1.3.1.17e) | Ethylester von (1.3.1.17a) (Quizalofop-P-ethyl), |
| (1.3.1.17f) | Methylester von (1.3.1.17a) (Quizalofop-P-methyl), |
| (1.3.1.17g) | Tetrahydrofurfurylester von (1.3.1.17a) (Quizalofop-P-tefuryl), |
| (1.3.1.18) | (R)-2-(4-(6-Chlor-2-chinoxalyloxy)phenoxy)propionsäure-2-isopropylidenaminooxy-ethylester (Propaquizafop), |
| (1.3.1.19) | 2-(4-(6-Fluor-2-chinoxalyloxy)phenoxy)propionsäuremethylester (s. J. Pest. Sci. Vol. 10, 61 (1985)), |
| (1.3.1.20) | (RS)-2-(4-(6-Chlorbenzoxazol-2-yl-oxy)-phenoxy) propionsäure (Fenoxaprop), |
| (1.3.1.20a) | Ethylester von (1.3.1.20), d. h. Fenoxaprop-ethyl, |
| (1.3.1.20b) | (R)-2-(4-(6-Chlorbenzoxazol-2-yl-oxy)-phenoxy) propionsäure (Fenoxaprop-P), |
| (1.3.1.20c) | Ethylester von (1.3.1.20b), d. h. Fenoxaprop-P-ethyl, |
| (1.3.1.21) | 2-(4-(6-Chlorbenzthiazol-2-yloxy)phenoxy)propionsäureethylester (DE-A-26 40 730), |
| (1.3.1.22) | (R)-2-[4-(6-Chlor-1,3-benzoxazol-2-yloxy)phenoxy]-2'-fluor-N-methylpropionanilid (Metamifop), |
| (1.3.1.23) | Alloxydim, |
| (1.3.1.24) | Butroxydim, |
| (1.3.1.25) | Clethodim, |
| (1.3.1.26) | Cloproxydim, |
| (1.3.1.27) | Cycloxydim, |
| (1.3.1.28) | Profoxydim, |
| (1.3.1.29) | Sethoxydim, |
| (1.3.1.30) | Tepraloxydim, |
| (1.3.1.31) | Tralkoxydim und |
| (1.3.1.32) | 8-(2,6-diethyl-p-tolyl)-1,2,4,5-tetrahydro-7-oxo-7H-pyrazolo[1,2-d][1,4,5]oxadiazepin-9-yl 2,2-dimethylpropionate (Pinoxaden). |
| | |
| (1.3.2) | Inhibitoren der Lipidsynthese mit anderem Wirkungsmechanismus als ACCase-Inhibitoren, beispielsweise |
| (1.3.2.1) | S-Ethyl-N,N-dipropylthiocarbamat (EPTC), |
| (1.3.2.2) | S-Ethyl-N,N-düsobutylthiocarbamat (Butylate), |
| (1.3.2.3) | Thiobencarb = Benthiocarb, |
| (1.3.2.4) | Cycloate, |
| (1.3.2.5) | Dimepiperate, |
| (1.3.2.6) | Esprocarb, |
| (1.3.2.7) | Molinate, |
| (1.3.2.8) | Orbencarb, |
| (1.3.2.9) | Pebulate, |
| (1.3.2.10) | Prosulfocarb, |
| (1.3.2.11) | Tiocarbazil und |
| (1.3.2.12) | Tri-allate; |
| (1.3.2.13) | vernolate, |
| (1.3.2.14) | bensulide, |
| (1.3.2.15) | benfuresate, |
| (1.3.2.16) | ethofumesate, |
| (1.3.2.17) | TCA, |
| (1.3.2.18) | dalapon und |
| (1.3.2.19) | flupropanate, |
| | |
| (1.4) | Inhibitoren der Zellteilung und Zellentwicklung, beispielsweise |
| (1.4.1) | Inhibitoren der Zellwandsynthese (Cellulose-Synthese-Inhibitoren), beispielsweise |
| (1.4.1.1) | dichlobenil, |
| (1.4.1.2) | chlorthiamid, |
| (1.4.1.3) | isoxaben, |
| (1.4.1.4) | flupoxam und |
| (1.4.1.5) | Triaziflam, |
| | |
| (1.4.2) | Inhibitoren der Mikrotubuli (Inhibitoren der Bildung von Microtubuli und deren Organisation), wie |
| (1.4.2.1) | benefin = benfluralin, |
| (1.4.2.2) | butralin, |
| (1.4.2.3) | dinitramine, |
| (1.4.2.4) | ethalfluralin, |
| (1.4.2.5) | oryzalin, |
| (1.4.2.6) | pendimethalin, |
| (1.4.2.7) | trifluralin, |
| (1.4.2.8) | amiprophos-methyl, |
| (1.4.2.9) | butamiphos, |
| (1.4.2.10) | propyzamide = pronamide, |
| (1.4.2.11) | tebutam, |
| (1.4.2.12) | DCPA = chlorthal-dimethyl, |
| (1.4.2.13) | chlorpropham, |
| (1.4.2.14) | propham, |
| (1.4.2.15) | carbetamide, |
| (1.4.2.16) | Dithiopyr und |
| (1.4.2.17) | Thiazopyr, |
| | |
| (1.4.3) | Inhibitoren der Mitose oder Mikrotubuli-Organisation, wie |
| (1.4.3.1) | chlorpropham, |
| (1.4.3.2) | propham, |
| (1.4.3.3) | carbetamide, |
| | |
| (1.4.4) | Inhibitoren der Synthesen von langkettigen Fettsäuren (VLCFAs), wie |
| (1.4.4.1) | Acetochlor, |
| (1.4.4.2) | Alachlor, |
| (1.4.4.3) | Butachlor, |
| (1.4.4.4) | Dimethachlor, |
| (1.4.4.5) | Dimethenamid, |
| (1.4.4.6) | Metazachlor, |
| (1.4.4.7) | Metolachlor, |
| (1.4.4.8) | S-Metolachlor, |
| (1.4.4.9) | Pethoxamid, |
| (1.4.4.10) | Pretilachlor, |
| (1.4.4.11) | Propachlor, |
| (1.4.4.12) | Propisochlor und |
| (1.4.4.13) | Thenylchlor, |
| (1.4.4.14) | diphenamid, |
| (1.4.4.15) | napropamide, |
| (1.4.4.16) | naproanilide, |
| (1.4.4.17) | flufenacet, |
| (1.4.4.18) | mefenacet, |
| (1.4.4.19) | fentrazamide, |
| (1.4.4.20) | cafenstrole, |
| (1.4.4.21) | piperophos, |
| (1.4.4.22) | S-(N-Aryl-N-alkyl-carbamoylmethyl)-dithiophosphonsäureester und |
| (1.4.4.22a) | S-[N-(4-Chlorphenyl)-N-isopropyl-carbamoylmethyl]-O,O-dimethyl-dithiophosphat (Anilofos), |
| | |
| (1.5) | Herbizide, welche die Photosynthese unterbrechen, wie |
| (1.5.1) | Inhibitoren des Photosynthese II-Systems, wie |
| (1.5.1.1) | desmetryne, |
| (1.5.1.2) | bromacil, |
| (1.5.1.3) | lenacil, |
| (1.5.1.4) | terbacil, |
| (1.5.1.5) | pyrazon = chloridazon, |
| (1.5.1.6) | desmedipham, |
| (1.5.1.7) | phenmedipham, |
| (1.5.1.8) | chlorobromuron, |
| (1.5.1.9) | chlorotoluron, |
| (1.5.1.10) | chloroxuron, |
| (1.5.1.11) | dimefuron, |
| (1.5.1.12) | diuron, |
| (1.5.1.13) | ethidimuron, |
| (1.5.1.14) | fenuron, |
| (1.5.1.15) | fluometuron, |
| (1.5.1.16) | isoproturon, |
| (1.5.1.17) | isouron, |
| (1.5.1.18) | linuron, |
| (1.5.1.19) | methabenzthiazuron, |
| (1.5.1.20) | metobromuron, |
| (1.5.1.21) | metoxuron, |
| (1.5.1.22) | monolinuron, |
| (1.5.1.23) | neburon, |
| (1.5.1.24) | siduron, |
| (1.5.1.25) | tebuthiuron, |
| (1.5.1.26) | propanil, |
| (1.5.1.27) | pentanochlor, |
| (1.5.1.28) | bromofenoxim, |
| (1.5.1.29) | bromoxynil, |
| (1.5.1.30) | ioxynil, |
| (1.5.1.31) | bentazon, |
| (1.5.1.32) | pyridate, |
| (1.5.1.33) | pyridafol, |
| (1.5.1.34) | 4-Amino-N-tert-butyl-4,5-dihydro-3-isopropyl-5-oxo-1,2,4-1H-triazole-1-carboxamid (Amicarbazone), |
| (1.5.1.35) | 3-Cyclohexyl-6-dimethylamino-1-methyl-1,3,5-triazine-2,4-(1H,3H)-dion (Hexazinone), |
| (1.5.1.36) | 4-Amino-4,5-dihydro-3-methyl-6-phenyl-1,2,4-triazin-5-on (Metamitron), |
| (1.5.1.37) | 4-Amino-6-tert-butyl-4,5-dihydro-3-methylthio-1,2,4-triazin-5-on (Metribuzin); |
| (1.5.1.38) | Ametryn, |
| (1.5.1.39) | Atrazine, |
| (1.5.1.40) | Cyanazine, |
| (1.5.1.41) | Dimethametrin, |
| (1.5.1.42) | Prometon, |
| (1.5.1.43) | Prometryn, |
| (1.5.1.44) | Propazine, |
| (1.5.1.45) | Simazine, |
| (1.5.1.46) | Symetryn, |
| (1.5.1.47) | Terbumeton, |
| (1.5.1.48) | Terbuthylazine, |
| (1.5.1.49) | Terbutryn und |
| (1.5.1.50) | Trietazine, |
| | |
| (1.6) | Herbizide, welche die Pflanzenentwickung durch hormonähnliche Effekte beeinträchtigen, wie |
| (1.6.1) | clomeprop, |
| (1.6.2) | 2,4-D, |
| (1.6.3) | 2,4-DB, |
| (1.6.4) | dichlorprop = 2,4-DP, |
| (1.6.5) | MCPA, |
| (1.6.6) | MCPB, |
| (1.6.7) | mecoprop = MCPP = CMPP, |
| (1.6.8) | chloramben, |
| (1.6.9) | dicamba, |
| (1.6.10) | TBA, |
| (1.6.11) | quinclorac, |
| (1.6.12) | quinmerac, |
| (1.6.13) | benazolin-ethyl, |
| (1.6.14) | naptalam, |
| (1.6.15) | diflufenzopyr-Na, |
| (1.6.16) | Aminopyralid, |
| (1.6.17) | Clopyralid, |
| (1.6.18) | Fluroxypyr, |
| (1.6.19) | Picloram, |
| (1.6.20) | Triclopyr, |
| (1.6.21) | Forchlorfenuron und |
| (1.6.22) | Thidiazuron; |
| | |
| (1.7) | Herbizide mit noch unbestätigtem Wirkungsmechanismus, wie |
| (1.7.1) | Flamprop-M-methyl /-isopropyl, |
| (1.7.2) | difenzoquat, |
| (1.7.3) | DSMA, |
| (1.7.4) | MSMA, |
| (1.7.5) | bromobutide, |
| (1.7.6) | (chloro)-flurenol, |
| (1.7.7) | cinmethylin, |
| (1.7.8) | cumyluron, |
| (1.7.9) | dazomet, |
| (1.7.10) | dymron = daimuron, |
| (1.7.11) | methyl-dimuron= methyl-dymron, |
| (1.7.12) | etobenzanid, |
| (1.7.13) | fosamine, |
| (1.7.14) | indanofan, |
| (1.7.15) | metam, |
| (1.7.16) | oxaziclomefone und |
| (1.7.17) | pyributicarb, |
| | |
| (2) | Herbizide mit schneller Schadwirkung, beispielsweise |
| (2.1) | Herbizide, welche den Elektronentransport im Photosystem-I beeinträchtigen, wie |
| (2.1.1) | 1,1'-ethylene-2,2'-bipyridyldiylium-Salze (Diquat), |
| (2.1.1a) | das Dibromid von (2.1.1) (Diquat-dibromid), |
| (2.1.2) | 1,1'-dimethyl-4,4'-bipyridinium Salze (paraquat), |
| (2.1.2a) | das Dichlorid von (2.1.2) (Paraquat-dichlorid), |
| | |
| (2.2) | Inhibitoren der Protoporphyrin-oxidase, wie |
| (2.2.1) | acifluorfen-Na, |
| (2.2.2) | bifenox, |
| (2.2.3) | chlomethoxyfen, |
| (2.2.4) | fluoroglycofen-ethyl, |
| (2.2.5) | fomesafen, |
| (2.2.6) | halosafen, |
| (2.2.7) | lactofen, |
| (2.2.8) | oxyfluorfen, |
| (2.2.9) | fluazolate, |
| (2.2.10) | pyraflufen-ethyl, |
| (2.2.11) | cinidon-ethyl, |
| (2.2.12) | flumioxazin, |
| (2.2.13) | flumiclorac-pentyl, |
| (2.2.14) | fluthiacet-methyl, |
| (2.2.15) | thidiazimin, |
| (2.2.16) | oxadiazon, |
| (2.2.17) | oxadiargyl, |
| (2.2.18) | pentoxazone, |
| (2.2.19) | benzfendizone, |
| (2.2.20) | butafenacil, |
| (2.2.21) | pyraclonil, |
| (2.2.22) | profluazol, |
| (2.2.23) | flufenpyr-ethyl, |
| (2.2.24) | 2-(2,4-Dichlor-5-prop-2-ynyloxyphenyl)-5,6,7,8-tetrahydro-1,2,4-triazolo[4,3-a]pyridin-3(2H)-one (Azafenidin), |
| (2.2.25) | (RS)-2-Chlor-3-[2-chloro-5-(4-difluoromethyl-4,5-dihydro-3-methyl-5-oxo-1H-1,2,4-triazol-1-yl)-4-fluorophenyl]propionsäureethylester (Carfentrazone-ethyl), |
| (2.2.26) | 2',4'-Dichlor-5'-(4-difluormethyl-4,5-dihydro-3-methyl-5-oxo-1H-1,2,4-triazol-1-yl)-methanesulfonanilid (Sulfentrazone) und |
| (2.2.27) | 4-[4,5-Dihydro-4-methyl-5-oxo-3-(trifluormethyl)-1H-1,2,4-triazol-1-yl]-2-[(ethylsulfonyl)amino]-5-fluorbenzolcarbothioamid (Bencarbazone); |
| | |
| (2.3) | Zerstörer der Zellmembranen in Pflanzen, wie |
| (2.3.1) | DNOC, |
| (2.3.2) | dinoseb und |
| (2.3.3) | dinoterb, |
| | |
| (2.4) | Herbizide mit unbekanntem Wirkungsmechanismus, wie |
| (2.4.1) | Ölsäure und |
| (2.4.2) | Pelargonsäure. |

Die obengenannten Herbizide der Gruppen (1) und (2) (siehe Tabelle 3) und deren Untergruppen sind aus den oben jeweils genannten Druckschriften bekannt und mit Ihren chemischen Namen definiert bzw. im Falle von Handelsproduken gemäß den "common names" definiert, welche beispielsweise in "The Pesticide Manual", The British Crop Protection Council, 14th Edition, 2006, oder im entsprechenden e-Pesticide Manual, Version 4.0, British Crop Protection Council 2006 oder auch im "Compendium of Pesticide Common Names" (per Internet abfragbar) angegeben sind.

Wenn die handelsüblichen Wirkstoffe vorzugsweise in Form eines speziellen Salzes oder Esters der angegebenen Verbindung vorliegt, so gilt der Hinweis auf die Verbindung vorzugsweise auf für die übliche Handelsform, sofern nicht diese ebenfalls angegeben sind.

Teilweise umfassen die Herbizidgruppen (1) und (2) und deren Untergruppen Wirkstoffe aus unterschiedlichen Strukturklassen. Die jeweiligen Herbizide gleicher Strukturklasse aus einer Gruppe oder Untergruppe zu den genannten Gruppen (1) und (2) bilden daher jeweils eine weitere bevorzugte Untergruppe innerhalb der jeweiligen wirkungsmechanistischen oder phänomenologischen Gruppe.

Die obengenannten Wirkstoffe sind für die erfindungsgemäße Verwendung in Kombination mit Safenern (I) oder deren Salzen geeignet, vorzugsweise in Kombination mit Verbindungen der Formel (Ia), (Ib) oder (Ic) oder deren Salzen.

Bevorzugt ist die erfindungsgemäße Verwendung mit Pflanzenschutzmitteln, welche eine Kombination aus einer Verbindung (Ia), (Ib) oder (Ic) mit einem oder mehreren Wirkstoffen aus Gruppe der Herbizidgruppen (1), (1.1), (1.1.1), (1.1.2), (1.1.3), (1.2), (1.2.1), (1.2.2), (1.3), (1.3.1), (1.3.2), (1.4), (1.4.1), (1.4.2), (1.4.3), (1.4.4), (1.5), (1.5.1), (1.6), (1.7), (2), (2.1), (2.2), (2.3) und (2.4) enthalten.

Weiter bevorzugt ist die erfindungsgemäße Verwendung mit Pflanzenschutzmitteln, welche eine Kombination aus einer Verbindung (Ia), (Ib) oder (Ic) mit einem oder mehreren Wirkstoffen aus der obengenannten Herbizidgruppe (1), (1.1), (1.1.1), (1.1.2), (1.1.3), (1.2), (1.2.1), (1.2.2), (1.3), (1.3.1), (1.3.2), (1.4), (1.4.1), (1.4.2), (1.4.3), (1.4.4), (1.5), (1.5.1), (1.6), (1.7), (2), (2.1), (2.2), (2.3) oder (2.4) enthalten.

Besonders bevorzugt ist die erfindungsgemäße Verwendung mit Pflanzenschutzmitteln mit einem Gehalt an einer Safener-Herbizid-Kombination aus der nachfolgenden Tabelle 4:

**Tabelle 4 Spezifische Herbizid-Safener-Kombinatonen**

| |
|---|
| (Ia) + (1.1.1.1), (Ia) + (1.1.1.2), (Ia) + (1.1.1.3), (Ia) + (1.1.1.4), (Ia) + (1.1.1.5), (Ia) + (1.1.1.6), (Ia) + (1.1.1.7), (Ia) + (1.1.1.8), (Ia) + (1.1.1.9), (Ia) + (1.1.1.10), (Ia) + (1.1.1.11), (Ia) + (1.1.1.12), (Ia) + (1.1.1.13), (Ia) + (1.1.1.14), (Ia) + (1.1.1.15), (Ia) + (1.1.1.16), (Ia) + (1.1.1.17), (Ia) + (1.1.1.18), (Ia) + (1.1.1.19), (Ia) + (1.1.1.20), (Ia) + (1.1.1.21), (Ia) + (1.1.1.22), (Ia) + (1.1.1.23), (Ia) + (1.1.1.24), (Ia) + (1.1.1.25), (Ia) + (1.1.1.26), (Ia) + (1.1.1.27), (Ia) + (1.1.1.28), (Ia) + (1.1.1.29), (Ia) + (1.1.1.30), (Ia) + (1.1.1.31), (Ia) + (1.1.1.32), (Ia) + (1.1.1.33), (Ia) + (1.1.1.34), (Ia) + (1.1.1.35), (Ia) + (1.1.1.36), (Ia) + (1.1.1.37), (Ia) + (1.1.1.38), (Ia) + (1.1.1.39), (Ia) + (1.1.1.40), (Ia) + (1.1.1.41), (Ia) + (1.1.1.42), (Ia) + (1.1.1.43), (Ia) + (1.1.1.44), (Ia) + (1.1.1.45), (Ia) + (1.1.1.46), (Ia) + (1.1.1.47), (Ia) + (1.1.2.1), (Ia) + (1.1.2.2), (Ia) + (1.1.2.3), (Ia) + (1.1.2.4), (Ia) + (1.1.2.5), (Ia) + (1.1.2.6), (Ia) + (1.1.2.7), (Ia) + (1.1.2.8), (Ia) + (1.1.2.9), (Ia) + (1.1.2.10), (Ia) + (1.1.3.1), (Ia) + (1.2.1.1), (Ia) + (1.2.1.2), (Ia) + (1.2.1.3), (Ia) + (1.2.1.4), (Ia) + (1.2.1.5), (Ia) + (1.2.1.6), (Ia) + (1.2.1.7), (Ia) + (1.2.1.8), (Ia) + (1.2.1.9), (Ia) + (1.2.1.10), (Ia) + (1.2.1.11), (Ia) + (1.2.1.11a), (Ia) + (1.2.1.11 b), (Ia) + (1.2.1.12), (Ia) + (1.2.1.13), (Ia) + (1.2.1.14), (Ia) + (1.2.1.14a), (Ia) + (1.2.1.14b), (Ia) + (1.2.1.15), (Ia) + (1.2.1.15a), (Ia) + (1.2.1.15b), (Ia) + (1.2.1.16), (Ia) + (1.2.1.17), (Ia) + (1.2.1.18), (Ia) + (1.2.1.19), (Ia) + (1.2.1.20), (Ia) + (1.2.1.21), (Ia) + (1.2.1.22), (Ia) + (1.2.1.23), (Ia) + (1.2.1.24), (Ia) + (1.2.1.25), (Ia) + (1.2.1.26), (Ia) + (1.2.1.27), (Ia) + (1.2.1.28), (Ia) + (1.2.1.29), (Ia) + (1.2.1.29a), (Ia) + (1.2.1.29b), (Ia) + (1.2.1.29c), (Ia) + (1.2.1.30), (Ia) + (1.2.1.31), (Ia) + (1.2.1.32), (Ia) + (1.2.1.33), (Ia) + (1.2.1.33a), (Ia) + (1.2.1.34), (Ia) + (1.2.1.35), (Ia) + (1.2.1.36), (Ia) + (1.2.1.37), (Ia) + (1.2.1.37a), (Ia) + (1.2.1.37b), (Ia) + (1.2.1.38), (Ia) + (1.2.1.39), (Ia) + (1.2.1.40), |
| (Ia) + (1.2.1.41), (Ia) + (1.2.1.42), (Ia) + (1.2.1.43), (Ia) + (1.2.1.44), (Ia) + (1.2.1.45), (Ia) + (1.2.1.46), (Ia) + (1.2.1.47), (Ia) + (1.2.1.48), (Ia) + (1.2.1.49), (Ia) + (1.2.1.50), (Ia) + (1.2.1.51), (Ia) + (1.2.1.52), (Ia) + (1.2.1.53), (Ia) + (1.2.1.54), (Ia) + (1.2.1.55), (Ia) + (1.2.1.56), (Ia) + (1.2.1.56a), (Ia) + (1.2.1.56b), (Ia) + (1.2.1.57), (Ia) + (1.2.1.57a), (Ia) + (1.2.1.57b), (Ia) + (1.2.1.58), (Ia) + (1.2.1.59), (Ia) + (1.2.1.60), (Ia) + (1.2.1.61), (Ia) + (1.2.1.62), (Ia) + (1.2.1.62a), (Ia) + (1.2.1.62b), (Ia) + (1.2.1.63), (Ia) + (1.2.1.64), (Ia) + (1.2.1.65), (Ia) + (1.2.1.66), (Ia) + (1.2.1.67), (Ia) + (1.2.1.68), (Ia) + (1.2.1.68a), (Ia) + (1.2.1.68b), (Ia) + (1.2.1.69), (Ia) + (1.2.2.1), (Ia) + (1.2.2.1a), (Ia) + (1.2.1.1b), (Ia) + (1.2.1.1c), (Ia) + (1.2.2.2), (Ia) + (1.2.3), (Ia) + (1.2.3.1), (Ia) + (1.2.3.2), (Ia) + (1.2.3.1a), (Ia) + (1.2.3.1b), (Ia) + (1.2.3.1c), (Ia) + (1.3.1.1), (Ia) + (1.3.1.1a), (Ia) + (1.3.1.2), (Ia) + (1.3.1.3), (Ia) + (1.3.1.4), (Ia) + (1.3.1.5), (Ia) + (1.3.1.6), (Ia) + (1.3.1.7), (Ia) + (1.3.1.8), (Ia) + (1.3.1.9), (Ia) + (1.3.1.10), (Ia) + (1.3.1.11), (Ia) + (1.3.1.12), (Ia) + (1.3.1.12a), (Ia) + (1.3.1.12b), (Ia) + (1.3.1.12c), (Ia) + (1.3.1.12d), (Ia) + (1.3.1.12e), (Ia) + (1.3.1.12f), (Ia) + (1.3.1.12g), (Ia) + (1.3.1.13), (Ia) + (1.3.1.14), (Ia) + (1.3.1.15), (Ia) + (1.3.1.15a), (Ia) + (1.3.1.16), (Ia) + (1.3.1.17), (Ia) + (1.3.1.17a), (Ia) + (1.3.1.17b), (Ia) + (1.3.1.17c), (Ia) + (1.3.1.17d), (Ia) + (1.3.1.17e), (Ia) + (1.3.1.17f), (Ia) + (1.3.1.17g), (Ia) + (1.3.1.18), (Ia) + (1.3.1.19), (Ia) + (1.3.1.20), (Ia) + (1.3.1.20a), (Ia) + (1.3.1.20b), (Ia) + (1.3.1.20c), (Ia) + (1.3.1.21), (Ia) + (1.3.1.22), (Ia) + (1.3.1.23), (Ia) + (1.3.1.24), (Ia) + (1.3.1.25), (Ia) + (1.3.1.26), (Ia) + (1.3.1.27), (Ia) + (1.3.1.28), (Ia) + (1.3.1.29), (Ia) + (1.3.1.30), (Ia) + (1.3.1.31), (Ia) + (1.3.1.32), (Ia) + (1.3.2.1), (Ia) + (1.3.2.2), (Ia) + (1.3.2.3), (Ia) + (1.3.2.4), (Ia) + (1.3.2.5), (Ia) + (1.3.2.6), (Ia) + (1.3.2.7), (Ia) + (1.3.2.8), (Ia) + (1.3.2.9), (Ia) + (1.3.2.10), (Ia) + (1.3.2.11), (Ia) + (1.3.2.12), (Ia) + (1.3.2.13), (Ia) + (1.3.2.14), (Ia) + (1.3.2.15), (Ia) + (1.3.2.16), (Ia) + (1.3.2.17), (Ia) + (1.3.2.18), (Ia) + (1.3.2.19), (Ia) + (1.4.1.1), (Ia) + (1.4.1.2), (Ia) + (1.4.1.3), (Ia) + (1.4.1.4), (Ia) + (1.4.1.5), (Ia) + (1.4.2.1), (Ia) + (1.4.2.2), (Ia) + (1.4.2.3), (Ia) + (1.4.2.4), (Ia) + (1.4.2.5), |
| (Ia) + (1.4.2.6), (Ia) + (1.4.2.7), (Ia) + (1.4.2.8), (Ia) + (1.4.2.9), (Ia) + (1.4.2.10), (Ia) + (1.4.2.11), (Ia) + (1.4.2.12), (Ia) + (1.4.2.13), (Ia) + (1.4.2.14), (Ia) + (1.4.2.15), (Ia) + (1.4.2.16), (Ia) + (1.4.2.17), (Ia) + (1.4.3.1), (Ia) + (1.4.3.2), (Ia) + (1.4.3.3), (Ia) + (1.4.4.1), (Ia) + (1.4.4.2), (Ia) + (1.4.4.3), (Ia) + (1.4.4.4), (Ia) + (1.4.4.5), (Ia) + (1.4.4.6), (Ia) + (1.4.4.7), (Ia) + (1.4.4.8), (Ia) + (1.4.4.9), (Ia) + (1.4.4.10), (Ia) + (1.4.4.11), (Ia) + (1.4.4.12), (Ia) + (1.4.4.13), (Ia) + (1.4.4.14), (Ia) + (1.4.4.15), (Ia) + (1.4.4.16), (Ia) + (1.4.4.17), (Ia) + (1.4.4.18), (Ia) + (1.4.4.19), (Ia) + (1.4.4.20), (Ia) + (1.4.4.21), (Ia) + (1.4.4.22), (Ia) + (1.4.4.22a), (Ia) + (1.5.1.1), (Ia) + (1.5.1.2), (Ia) + (1.5.1.3), (Ia) + (1.5.1.4), (Ia) + (1.5.1.5), (Ia) + (1.5.1.6), (Ia) + (1.5.1.7), (Ia) + (1.5.1.8), (Ia) + (1.5.1.9), (Ia) + (1.5.1.10), (Ia) + (1.5.1.11), (Ia) + (1.5.1.12), (Ia) + (1.5.1.13), (Ia) + (1.5.1.14), (Ia) + (1.5.1.15), (Ia) + (1.5.1.16), (Ia) + (1.5.1.17), (Ia) + (1.5.1.18), (Ia) + (1.5.1.19), (Ia) + (1.5.1.20), (Ia) + (1.5.1.21), (Ia) + (1.5.1.22), (Ia) + (1.5.1.23), (Ia) + (1.5.1.24), (Ia) + (1.5.1.25), (Ia) + (1.5.1.26), (Ia) + (1.5.1.27), (Ia) + (1.5.1.28), (Ia) + (1.5.1.29), (Ia) + (1.5.1.30), (Ia) + (1.5.1.31), (Ia) + (1.5.1.32), (Ia) + (1.5.1.33), (Ia) + (1.5.1.34), (Ia) + (1.5.1.35), (Ia) + (1.5.1.36), (Ia) + (1.5.1.37), (Ia) + (1.5.1.38), (Ia) + (1.5.1.39), (Ia) + (1.5.1.40), (Ia) + (1.5.1.41), (Ia) + (1.5.1.42), (Ia) + (1.5.1.43), (Ia) + (1.5.1.44), (Ia) + (1.5.1.45), (Ia) + (1.5.1.46), (Ia) + (1.5.1.47), (Ia) + (1.5.1.48), (Ia) + (1.5.1.49), (Ia) + (1.5.1.50), (Ia) + (1.6.1), (Ia) + (1.6.2), (Ia) + (1.6.3), (Ia) + (1.6.4), (Ia) + (1.6.5), (Ia) + (1.6.6), (Ia) + (1.6.7), (Ia) + (1.6.8), (Ia) + (1.6.9), (Ia) + (1.6.10), (Ia) + (1.6.11), (Ia) + (1.6.12), (Ia) + (1.6.13), (Ia) + (1.6.14), (Ia) + (1.6.15), (Ia) + (1.6.16), (Ia) + (1.6.17), (Ia) + (1.6.18), (Ia) + (1.6.19), (Ia) + (1.6.20), (Ia) + (1.6.21), (Ia) + (1.6.22), (Ia) + (1.7.1), (Ia) + (1.7.2), (Ia) + (1.7.3), (Ia) + (1.7.4), (Ia) + (1.7.5), (Ia) + (1.7.6), (Ia) + (1.7.7), (Ia) + (1.7.8), (Ia) + (1.7.9), (Ia) + (1.7.10), (Ia) + (1.7.11), (Ia) + (1.7.12), (Ia) + (1.7.13), (Ia) + (1.7.14), (Ia) + (1.7.15), (Ia) + (1.7.16), (Ia) + (1.7.17), (Ia) + (2.1.1), (Ia) + (2.1.1a), (Ia) + (2.1.2), (Ia) + (2.1.2a), (Ia) + (2.2.1), (Ia) + (2.2.2), (Ia) + (2.2.3), (Ia) + (2.2.4), (Ia) + (2.2.5), (Ia) + (2.2.6), (Ia) + (2.2.7), (Ia) + (2.2.8), |
| (Ia) + (2.2.9), (Ia) + (2.2.10), (Ia) + (2.2.11), (Ia) + (2.2.12), (Ia) + (2.2.13), (Ia) + (2.2.14), (Ia) + (2.2.15), (Ia) + (2.2.16), (Ia) + (2.2.17), (Ia) + (2.2.18), (Ia) + (2.2.19), (Ia) + (2.2.20), (Ia) + (2.2.21), (Ia) + (2.2.22), (Ia) + (2.2.23), (Ia) + (2.2.24), (Ia) + (2.2.25), (Ia) + (2.2.26), (Ia) + (2.2.27), (Ia) + (2.3.1), (Ia) + (2.3.2), (Ia) + (2.3.3), (Ia) + (2.4.1) (Ia) + (2.4.2). (Ib) + (1.1.1.1), (Ib) + (1.1.1.2), (Ib) + (1.1.1.3), (Ib) + (1.1.1.4), (Ib) + (1.1.1.5), (Ib) + (1.1.1.6), (Ib) + (1.1.1.7), (Ib) + (1.1.1.8), (Ib) + (1.1.1.9), (Ib) + (1.1.1.10), (Ib) + (1.1.1.11), (Ib) + (1.1.1.12), (Ib) + (1.1.1.13), (Ib) + (1.1.1.14), (Ib) + (1.1.1.15), (Ib) + (1.1.1.16), (Ib) + (1.1.1.17), (Ib) + (1.1.1.18), (Ib) + (1.1.1.19), (Ib) + (1.1.1.20), (Ib) + (1.1.1.21), (Ib) + (1.1.1.22), (Ib) + (1.1.1.23), (Ib) + (1.1.1.24), (Ib) + (1.1.1.25), (Ib) + (1.1.1.26), (Ib) + (1.1.1.27), (Ib) + (1.1.1.28), (Ib) + (1.1.1.29), (Ib) + (1.1.1.30), (Ib) + (1.1.1.31), (Ib) + (1.1.1.32), (Ib) + (1.1.1.33), (Ib) + (1.1.1.34), (Ib) + (1.1.1.35), (Ib) + (1.1.1.36), (Ib) + (1.1.1.37), (Ib) + (1.1.1.38), (Ib) + (1.1.1.39), (Ib) + (1.1.1.40), (Ib) + (1.1.1.41), (Ib) + (1.1.1.42), (Ib) + (1.1.1.43), (Ib) + (1.1.1.44), (Ib) + (1.1.1.45), (Ib) + (1.1.1.46), (Ib) + (1.1.1.47), (Ib) + (1.1.2.1), (Ib) + (1.1.2.2), (Ib) + (1.1.2.3), (Ib) + (1.1.2.4), (Ib) + (1.1.2.5), (Ib) + (1.1.2.6), (Ib) + (1.1.2.7), (Ib) + (1.1.2.8), (Ib) + (1.1.2.9), (Ib) + (1.1.2.10), (Ib) + (1.1.3.1), (Ib) + (1.2.1.1), (Ib) + (1.2.1.2), (Ib) + (1.2.1.3), (Ib) + (1.2.1.4), (Ib) + (1.2.1.5), (Ib) + (1.2.1.6), (Ib) + (1.2.1.7), (Ib) + (1.2.1.8), (Ib) + (1.2.1.9), (Ib) + (1.2.1.10), (Ib) + (1.2.1.11), (Ib) + (1.2.1.11a), (Ib) + (1.2.1.11b), (Ib) + (1.2.1.12), (Ib) + (1.2.1.13), (Ib) + (1.2.1.14), (Ib) + (1.2.1.14a), (Ib) + (1.2.1.14b), (Ib) + (1.2.1.15), (Ib) + (1.2.1.15a), (Ib) + (1.2.1.15b), (Ib) + (1.2.1.16), (Ib) + (1.2.1.17), (Ib) + (1.2.1.18), (Ib) + (1.2.1.19), (Ib) + (1.2.1.20), (Ib) + (1.2.1.21), (Ib) + (1.2.1.22), (Ib) + (1.2.1.23), (Ib) + (1.2.1.24), (Ib) + (1.2.1.25), (Ib) + (1.2.1.26), (Ib) + (1.2.1.27), (Ib) + (1.2.1.28), (Ib) + (1.2.1.29), (Ib) + (1.2.1.29a), (Ib) + (1.2.1.29b), (Ib) + (1.2.1.29c), (Ib) + (1.2.1.30), (Ib) + (1.2.1.31), (Ib) + (1.2.1.32), (Ib) + (1.2.1.33), (Ib) + (1.2.1.33a), (Ib) + (1.2.1.34), (Ib) + (1.2.1.35), (Ib) + (1.2.1.36), (Ib) + (1.2.1.37), (Ib) + (1.2.1.37a), (Ib) + (1.2.1.37b), (Ib) + (1.2.1.38), (Ib) + (1.2.1.39), (Ib) + (1.2.1.40), (Ib) + (1.2.1.41), (Ib) + (1.2.1.42), (Ib) + (1.2.1.43), (Ib) + (1.2.1.44), (Ib) + (1.2.1.45), (Ib) + (1.2.1.46), (Ib) + (1.2.1.47), (Ib) + (1.2.1.48), |
| (Ib) + (1.2.1.49), (Ib) + (1.2.1.50), (Ib) + (1.2.1.51), (Ib) + (1.2.1.52), (Ib) + (1.2.1.53), (Ib) + (1.2.1.54), (Ib) + (1.2.1.55), (Ib) + (1.2.1.56), (Ib) + (1.2.1.56a), (Ib) + (1.2.1.56b), (Ib) + (1.2.1.57), (Ib) + (1.2.1.57a), (Ib) + (1.2.1.57b), (Ib) + (1.2.1.58), (Ib) + (1.2.1.59), (Ib) + (1.2.1.60), (Ib) + (1.2.1.61), (Ib) + (1.2.1.62), (Ib) + (1.2.1.62a), (Ib) + (1.2.1.62b), (Ib) + (1.2.1.63), (Ib) + (1.2.1.64), (Ib) + (1.2.1.65), (Ib) + (1.2.1.66), (Ib) + (1.2.1.67), (Ib) + (1.2.1.68), (Ib) + (1.2.1.68a), (Ib) + (1.2.1.68b), (Ib) + (1.2.1.69), (Ib) + (1.2.2.1), (Ib) + (1.2.2.1a), (Ib) + (1.2.1.1b), (Ib) + (1.2.1.1c), (Ib) + (1.2.2.2), (Ib) + (1.2.3), (Ib) + (1.2.3.1), (Ib) + (1.2.3.2), (Ib) + (1.2.3.1a), (Ib) + (1.2.3.1b), (Ib) + (1.2.3.1c), (Ib) + (1.3.1.1), (Ib) + (1.3.1.1a), (Ib) + (1.3.1.2), (Ib) + (1.3.1.3), (Ib) + (1.3.1.4), (Ib) + (1.3.1.5), (Ib) + (1.3.1.6), (Ib) + (1.3.1.7), (Ib) + (1.3.1.8), (Ib) + (1.3.1.9), (Ib) + (1.3.1.10), (Ib) + (1.3.1.11), (Ib) + (1.3.1.12), (Ib) + (1.3.1.12a), (Ib) + (1.3.1.12b), (Ib) + (1.3.1.12c), (Ib) + (1.3.1.12d), (Ib) + (1.3.1.12e), (Ib) + (1.3.1.12f), (Ib) + (1.3.1.12g), (Ib) + (1.3.1.13), (Ib) + (1.3.1.14), (Ib) + (1.3.1.15), (Ib) + (1.3.1.15a), (Ib) + (1.3.1.16), (Ib) + (1.3.1.17), (Ib) + (1.3.1.17a), (Ib) + (1.3.1.17b), (Ib) + (1.3.1.17c), (Ib) + (1.3.1.17d), (Ib) + (1.3.1.17e), (Ib) + (1.3.1.17f), (Ib) + (1.3.1.17g), (Ib) + (1.3.1.18), (Ib) + (1.3.1.19), (Ib) + (1.3.1.20), (Ib) + (1.3.1.20a), (Ib) + (1.3.1.20b), (Ib) + (1.3.1.20c), (Ib) + (1.3.1.21), (Ib) + (1.3.1.22), (Ib) + (1.3.1.23), (Ib) + (1.3.1.24), (Ib) + (1.3.1.25), (Ib) + (1.3.1.26), (Ib) + (1.3.1.27), (Ib) + (1.3.1.28), (Ib) + (1.3.1.29), (Ib) + (1.3.1.30), (Ib) + (1.3.1.31), (Ib) + (1.3.1.32), (Ib) + (1.3.2.1), (Ib) + (1.3.2.2), (Ib) + (1.3.2.3), (Ib) + (1.3.2.4), (Ib) + (1.3.2.5), (Ib) + (1.3.2.6), (Ib) + (1.3.2.7), (Ib) + (1.3.2.8), (Ib) + (1.3.2.9), (Ib) + (1.3.2.10), (Ib) + (1.3.2.11), (Ib) + (1.3.2.12), (Ib) + (1.3.2.13), (Ib) + (1.3.2.14), (Ib) + (1.3.2.15), (Ib) + (1.3.2.16), (Ib) + (1.3.2.17), (Ib) + (1.3.2.18), (Ib) + (1.3.2.19), (Ib) + (1.4.1.1), (Ib) + (1.4.1.2), (Ib) + (1.4.1.3), (Ib) + (1.4.1.4), (Ib) + (1.4.1.5), (Ib) + (1.4.2.1), (Ib) + (1.4.2.2), (Ib) + (1.4.2.3), (Ib) + (1.4.2.4), (Ib) + (1.4.2.5), (Ib) + (1.4.2.6), (Ib) + (1.4.2.7), (Ib) + (1.4.2.8), (Ib) + (1.4.2.9), (Ib) + (1.4.2.10), (Ib) + (1.4.2.11), (Ib) + (1.4.2.12), (Ib) + (1.4.2.13), |
| (Ib) + (1.4.2.14), (Ib) + (1.4.2.15), (Ib) + (1.4.2.16), (Ib) + (1.4.2.17), (Ib) + (1.4.3.1), (Ib) + (1.4.3.2), (Ib) + (1.4.3.3), (Ib) + (1.4.4.1), (Ib) + (1.4.4.2), (Ib) + (1.4.4.3), (Ib) + (1.4.4.4), (Ib) + (1.4.4.5), (Ib) + (1.4.4.6), (Ib) + (1.4.4.7), (Ib) + (1.4.4.8), (Ib) + (1.4.4.9), (Ib) + (1.4.4.10), (Ib) + (1.4.4.11), (Ib) + (1.4.4.12), (Ib) + (1.4.4.13), (Ib) + (1.4.4.14), (Ib) + (1.4.4.15), (Ib) + (1.4.4.16), (Ib) + (1.4.4.17), (Ib) + (1.4.4.18), (Ib) + (1.4.4.19), (Ib) + (1.4.4.20), (Ib) + (1.4.4.21), (Ib) + (1.4.4.22), (Ib) + (1.4.4.22a), (Ib) + (1.5.1.1), (Ib) + (1.5.1.2), (Ib) + (1.5.1.3), (Ib) + (1.5.1.4), (Ib) + (1.5.1.5), (Ib) + (1.5.1.6), (Ib) + (1.5.1.7), (Ib) + (1.5.1.8), (Ib) + (1.5.1.9), (Ib) + (1.5.1.10), (Ib) + (1.5.1.11), (Ib) + (1.5.1.12), (Ib) + (1.5.1.13), (Ib) + (1.5.1.14), (Ib) + (1.5.1.15), (Ib) + (1.5.1.16), (Ib) + (1.5.1.17), (Ib) + (1.5.1.18), (Ib) + (1.5.1.19), (Ib) + (1.5.1.20), (Ib) + (1.5.1.21), (Ib) + (1.5.1.22), (Ib) + (1.5.1.23), (Ib) + (1.5.1.24), (Ib) + (1.5.1.25), (Ib) + (1.5.1.26), (Ib) + (1.5.1.27), (Ib) + (1.5.1.28), (Ib) + (1.5.1.29), (Ib) + (1.5.1.30), (Ib) + (1.5.1.31), (Ib) + (1.5.1.32), (Ib) + (1.5.1.33), (Ib) + (1.5.1.34), (Ib) + (1.5.1.35), (Ib) + (1.5.1.36), (Ib) + (1.5.1.37), (Ib) + (1.5.1.38), (Ib) + (1.5.1.39), (Ib) + (1.5.1.40), (Ib) + (1.5.1.41), (Ib) + (1.5.1.42), (Ib) + (1.5.1.43), (Ib) + (1.5.1.44), (Ib) + (1.5.1.45), (Ib) + (1.5.1.46), (Ib) + (1.5.1.47), (Ib) + (1.5.1.48), (Ib) + (1.5.1.49), (Ib) + (1.5.1.50), (Ib) + (1.6.1), (Ib) + (1.6.2), (Ib) + (1.6.3), (Ib) + (1.6.4), (Ib) + (1.6.5), (Ib) + (1.6.6), (Ib) + (1.6.7), (Ib) + (1.6.8), (Ib) + (1.6.9), (Ib) + (1.6.10), (Ib) + (1.6.11), (Ib) + (1.6.12), (Ib) + (1.6.13), (Ib) + (1.6.14), (Ib) + (1.6.15), (Ib) + (1.6.16), (Ib) + (1.6.17), (Ib) + (1.6.18), (Ib) + (1.6.19), (Ib) + (1.6.20), (Ib) + (1.6.21), (Ib) + (1.6.22), (Ib) + (1.7.1), (Ib) + (1.7.2), (Ib) + (1.7.3), (Ib) + (1.7.4), (Ib) + (1.7.5), (Ib) + (1.7.6), (Ib) + (1.7.7), (Ib) + (1.7.8), (Ib) + (1.7.9), (Ib) + (1.7.10), (Ib) + (1.7.11), (Ib) + (1.7.12), (Ib) + (1.7.13), (Ib) + (1.7.14), (Ib) + (1.7.15), (Ib) + (1.7.16), (Ib) + (1.7.17), (Ib) + (2.1.1), (Ib) + (2.1.1a), (Ib) + (2.1.2), (Ib) + (2.1.2a), (Ib) + (2.2.1), (Ib) + (2.2.2), (Ib) + (2.2.3), (Ib) + (2.2.4), (Ib) + (2.2.5), (Ib) + (2.2.6), (Ib) + (2.2.7), (Ib) + (2.2.8), (Ib) + (2.2.9), (Ib) + (2.2.10), (Ib) + (2.2.11), (Ib) + (2.2.12), (Ib) + (2.2.13), (Ib) + (2.2.14), (Ib) + (2.2.15), (Ib) + (2.2.16), (Ib) + (2.2.17), (Ib) + (2.2.18), |
| (Ib) + (2.2.19), (Ib) + (2.2.20), (Ib) + (2.2.21), (Ib) + (2.2.22), (Ib) + (2.2.23), (Ib) + (2.2.24), (Ib) + (2.2.25), (Ib) + (2.2.26), (Ib) + (2.2.27), (Ib) + (2.3.1), (Ib) + (2.3.2), (Ib) + (2.3.3), (Ib) + (2.4.1) (Ib) + (2.4.2). (Ic) + (1.1.1.1), (Ic) + (1.1.1.2), (Ic) + (1.1.1.3), (Ic) + (1.1.1.4), (1c) + (1.1.1.5), (Ic) + (1.1.1.6), (Ic) + (1.1.1.7), (Ic) + (1.1.1.8), (Ic) + (1.1.1.9), (Ic) + (1.1.1.10), (Ic) 0+ (1.1.1.11), (Ic) + (1.1.1.12), (Ic) + (1.1.1.13), (Ic) + (1.1.1.14), (Ic) + (1.1.1.15), (Ic) + (1.1.1.16), (Ic) + (1.1.1.17), (Ic) + (1.1.1.18), (Ic) + (1.1.1.19), (Ic) + (1.1.1.20), (Ic) + (1.1.1.21), (Ic) + (1.1.1.22), (Ic) + (1.1.1.23), (Ic) + (1.1.1.24), (Ic) + (1.1.1.25), (Ic) + (1.1.1.26), (Ic) + (1.1.1.27), (Ic) + (1.1.1.28), (Ic) + (1.1.1.29), (Ic) + (1.1.1.30), (Ic) + (1.1.1.31), (Ic) + (1.1.1.32), (Ic) + (1.1.1.33), (Ic) + (1.1.1.34), (Ic) + (1.1.1.35), (Ic) + (1.1.1.36), (Ic) + (1.1.1.37), (Ic) + (1.1.1.38), (Ic) + (1.1.1.39), (Ic) + (1.1.1.40), (Ic) + (1.1.1.41), (Ic) + (1.1.1.42), (Ic) + (1.1.1.43), (Ic) + (1.1.1.44), (Ic) + (1.1.1.45), (Ic) + (1.1.1.46), (Ic) + (1.1.1.47), (Ic) + (1.1.2.1), (Ic) + (1.1.2.2), (Ic) + (1.1.2.3), (Ic) + (1.1.2.4), (Ic) + (1.1.2.5), (Ic) + (1.1.2.6), (Ic) + (1.1.2.7), (Ic) + (1.1.2.8), (Ic) + (1.1.2.9), (Ic) + (1.1.2.10), (Ic) + (1.1.3.1), (Ic) + (1.2.1.1), (Ic) + (1.2.1.2), (Ic) + (1.2.1.3), (Ic) + (1.2.1.4), (Ic) + (1.2.1.5), (Ic) + (1.2.1.6), (Ic) + (1.2.1.7), (Ic) + (1.2.1.8), (Ic) + (1.2.1.9), (Ic) + (1.2.1.10), (Ic) + (1.2.1.11), (Ic) + (1.2.1.11a), (Ic) + (1.2.1.11b), (Ic) + (1.2.1.12), (Ic) + (1.2.1.13), (Ic) + (1.2.1.14), (Ic) + (1.2.1.14a), (Ic) + (1.2.1.14b), (Ic) + (1.2.1.15), (Ic) + (1.2.1.15a), (Ic) + (1.2.1.15b), (Ic) + (1.2.1.16), (Ic) + (1.2.1.17), (Ic) + (1.2.1.18), (Ic) + (1.2.1.19), (Ic) + (1.2.1.20), (Ic) + (1.2.1.21), (Ic) + (1.2.1.22), (Ic) + (1.2.1.23), (Ic) + (1.2.1.24), (Ic) + (1.2.1.25), (Ic) + (1.2.1.26), (Ic) + (1.2.1.27), (Ic) + (1.2.1.28), (Ic) + (1.2.1.29), (Ic) + (1.2.1.29a), (Ic) + (1.2.1.29b), (Ic) + (1.2.1.29c), (Ic) + (1.2.1.30), (Ic) + (1.2.1.31), (Ic) + (1.2.1.32), (Ic) + (1.2.1.33), (Ic) + (1.2.1.33a), (Ic) + (1.2.1.34), (Ic) + (1.2.1.35), (Ic) + (1.2.1.36), (Ic) + (1.2.1.37), (Ic) + (1.2.1.37a), (Ic) + (1.2.1.37b), (Ic) + (1.2.1.38), (Ic) + (1.2.1.39), (Ic) + (1.2.1.40), (Ic) + (1.2.1.41), (Ic) + (1.2.1.42), (Ic) + (1.2.1.43), (Ic) + (1.2.1.44), (Ic) + (1.2.1.45), (Ic) + (1.2.1.46), (Ic) + (1.2.1.47), (Ic) + (1.2.1.48), (Ic) + (1.2.1.49), (Ic) + (1.2.1.50), (Ic) + (1.2.1.51), (Ic) + (1.2.1.52), (Ic) + (1.2.1.53), (Ic) + (1.2.1.54), (Ic) + (1.2.1.55), (Ic) + (1.2.1.56), |
| (Ic) + (1.2.1.56a), (Ic) + (1.2.1.56b), (Ic) + (1.2.1.57), (Ic) + (1.2.1.57a), (Ic) + (1.2.1.57b), (Ic) + (1.2.1.58), (Ic) + (1.2.1.59), (Ic) + (1.2.1.60), (Ic) + (1.2.1.61), (Ic) + (1.2.1.62), (Ic) + (1.2.1.62a), (Ic) + (1.2.1.62b), (Ic) + (1.2.1.63), (Ic) + (1.2.1.64), (Ic) + (1.2.1.65), (Ic) + (1.2.1.66), (Ic) + (1.2.1.67), (Ic) + (1.2.1.68), (Ic) + (1.2.1.68a), (Ic) + (1.2.1.68b), (Ic) + (1.2.1.69), (Ic) + (1.2.2.1), (Ic) + (1.2.2.1a), (Ic) + (1.2.1.1b), (Ic) + (1.2.1.1c), (Ic) + (1.2.2.2), (Ic) + (1.2.3), (Ic) + (1.2.3.1), (Ic) + (1.2.3.2), (Ic) + (1.2.3.1a), (Ic) + (1.2.3.1b), (Ic) + (1.2.3.1c), (Ic) + (1.3.1.1), (Ic) + (1.3.1.1a), (Ic) + (1.3.1.2), (Ic) + (1.3.1.3), (Ic) + (1.3.1.4), (Ic) + (1.3.1.5), (Ic) + (1.3.1.6), (Ic) + (1.3.1.7), (Ic) + (1.3.1.8), (Ic) + (1.3.1.9), (Ic) + (1.3.1.10), (Ic) + (1.3.1.11), (Ic) + (1.3.1.12), (Ic) + (1.3.1.12a), (Ic) + (1.3.1.12b), (Ic) + (1.3.1.12c), (Ic) + (1.3.1.12d), (Ic) + (1.3.1.12e), (Ic) + (1.3.1.12f), (Ic) + (1.3.1.12g), (Ic) + (1.3.1.13), (Ic) + (1.3.1.14), (Ic) + (1.3.1.15), (Ic) + (1.3.1.15a), (Ic) + (1.3.1.16), (Ic) + (1.3.1.17), (Ic) + (1.3.1.17a), (Ic) + (1.3.1.17b), (Ic) + (1.3.1.17c), (Ic) + (1.3.1.17d), (Ic) + (1.3.1.17e), (Ic) + (1.3.1.17f), (Ic) + (1.3.1.17g), (Ic) + (1.3.1.18), (Ic) + (1.3.1.19), (Ic) + (1.3.1.20), (Ic) + (1.3.1.20a), (Ic) + (1.3.1.20b), (Ic) + (1.3.1.20c), (Ic) + (1.3.1.21), (Ic) + (1.3.1.22), (Ic) + (1.3.1.23), (Ic) + (1.3.1.24), (Ic) + (1.3.1.25), (Ic) + (1.3.1.26), (Ic) + (1.3.1.27), (Ic) + (1.3.1.28), (Ic) + (1.3.1.29), (Ic) + (1.3.1.30), (Ic) + (1.3.1.31), (Ic) + (1.3.1.32), (1c) + (1.3.2.1), (Ic) + (1.3.2.2), (Ic) + (1.3.2.3), (Ic) + (1.3.2.4), (Ic) + (1.3.2.5), (Ic) + (1.3.2.6), (Ic) + (1.3.2.7), (Ic) + (1.3.2.8), (Ic) + (1.3.2.9), (Ic) + (1.3.2.10), (Ic) + (1.3.2.11), (Ic) + (1.3.2.12), (Ic) + (1.3.2.13), (Ic) + (1.3.2.14), (Ic) + (1.3.2.15), (Ic) + (1.3.2.16), (Ic) + (1.3.2.17), (Ic) + (1.3.2.18), (Ic) + (1.3.2.19), (Ic) + (1.4.1.1), (Ic) + (1.4.1.2), (Ic) + (1.4.1.3), (Ic) + (1.4.1.4), (Ic) + (1.4.1.5), (Ic) + (1.4.2.1), (Ic) + (1.4.2.2), (Ic) + (1.4.2.3), (Ic) + (1.4.2.4), (Ic) + (1.4.2.5), (Ic) + (1.4.2.6), (Ic) + (1.4.2.7), (Ic) + (1.4.2.8), (Ic) + (1.4.2.9), (Ic) + (1.4.2.10), (Ic) + (1.4.2.11), (Ic) + (1.4.2.12), (Ic) + (1.4.2.13), (Ic) + (1.4.2.14), (Ic) + (1.4.2.15), (Ic) + (1.4.2.16), (Ic) + (1.4.2.17), (Ic) + (1.4.3.1), (Ic) + (1.4.3.2), (Ic) + (1.4.3.3), (Ic) + (1.4.4.1), |
| (Ic) + (1.4.4.2), (Ic) + (1.4.4.3), (Ic) + (1.4.4.4), (Ic) + (1.4.4.5), (Ic) + (1.4.4.6), (Ic) + (1.4.4.7), (Ic) + (1.4.4.8), (Ic) + (1.4.4.9), (Ic) + (1.4.4.10), (Ic) + (1.4.4.11), (Ic) + (1.4.4.12), (Ic) + (1.4.4.13), (Ic) + (1.4.4.14), (Ic) + (1.4.4.15), (Ic) + (1.4.4.16), (Ic) + (1.4.4.17), (Ic) + (1.4.4.18), (Ic) + (1.4.4.19), (Ic) + (1.4.4.20), (Ic) + (1.4.4.21), (Ic) + (1.4.4.22), (Ic) + (1.4.4.22a), (Ic) + (1.5.1.1), (Ic) + (1.5.1.2), (Ic) + (1.5.1.3), (Ic) + (1.5.1.4), (Ic) + (1.5.1.5), (Ic) + (1.5.1.6), (Ic) + (1.5.1.7), (Ic) + (1.5.1.8), (Ic) + (1.5.1.9), (Ic) + (1.5.1.10), (Ic) + (1.5.1.11), (Ic) + (1.5.1.12), (Ic) + (1.5.1.13), (Ic) + (1.5.1.14), (Ic) + (1.5.1.15), (Ic) + (1.5.1.16), (Ic) + (1.5.1.17), (Ic) + (1.5.1.18), (Ic) + (1.5.1.19), (Ic) + (1.5.1.20), (Ic) + (1.5.1.21), (Ic) + (1.5.1.22), (Ic) + (1.5.1.23), (Ic) + (1.5.1.24), (Ic) + (1.5.1.25), (Ic) + (1.5.1.26), (Ic) + (1.5.1.27), (Ic) + (1.5.1.28), (Ic) + (1.5.1.29), (Ic) + (1.5.1.30), (Ic) + (1.5.1.31), (Ic) + (1.5.1.32), (Ic) + (1.5.1.33), (Ic) + (1.5.1.34), (Ic) + (1.5.1.35), (Ic) + (1.5.1.36), (Ic) + (1.5.1.37), (Ic) + (1.5.1.38), (Ic) + (1.5.1.39), (Ic) + (1.5.1.40), (Ic) + (1.5.1.41), (Ic) + (1.5.1.42), (Ic) + (1.5.1.43), (Ic) + (1.5.1.44), (Ic) + (1.5.1.45), (Ic) + (1.5.1.46), (Ic) + (1.5.1.47), (Ic) + (1.5.1.48), (Ic) + (1.5.1.49), (Ic) + (1.5.1.50), (Ic) + (1.6.1), (Ic) + (1.6.2), (Ic) + (1.6.3), (Ic) + (1.6.4), (Ic) + (1.6.5), (Ic) + (1.6.6), (Ic) + (1.6.7), (Ic) + (1.6.8), (Ic) + (1.6.9), (Ic) + (1.6.10), (Ic) + (1.6.11), (Ic) + (1.6.12), (Ic) + (1.6.13), (Ic) + (1.6.14), (Ic) + (1.6.15), (Ic) + (1.6.16), (Ic) + (1.6.17), (Ic) + (1.6.18), (Ic) + (1.6.19), (Ic) + (1.6.20), (Ic) + (1.6.21), (Ic) + (1.6.22), (Ic) + (1.7.1), (Ic) + (1.7.2), (Ic) + (1.7.3), (Ic) + (1.7.4), (Ic) + (1.7.5), (Ic) + (1.7.6), (Ic) + (1.7.7), (Ic) + (1.7.8), (Ic) + (1.7.9), (Ic) + (1.7.10), (Ic) + (1.7.11), (Ic) + (1.7.12), (Ic) + (1.7.13), (Ic) + (1.7.14), (Ic) + (1.7.15), (Ic) + (1.7.16), (Ic) + (1.7.17), (Ic) + (2.1.1), (Ic) + (2.1.1a), (Ic) + (2.1.2), (Ic) + (2.1.2a), (Ic) + (2.2.1), (Ic) + (2.2.2), (Ic) + (2.2.3), (Ic) + (2.2.4), (Ic) + (2.2.5), (Ic) + (2.2.6), (Ic) + (2.2.7), (Ic) + (2.2.8), (Ic) + (2.2.9), (Ic) + (2.2.10), (Ic) + (2.2.11), (Ic) + (2.2.12), (Ic) + (2.2.13), (Ic) + (2.2.14), (Ic) + (2.2.15), (Ic) + (2.2.16), (Ic) + (2.2.17), (Ic) + (2.2.18), (Ic) + (2.2.19), (Ic) + (2.2.20), (Ic) + (2.2.21), (Ic) + (2.2.22), (Ic) + (2.2.23), (Ic) + (2.2.24), (Ic) + (2.2.25), (Ic) + (2.2.26), (Ic) + (2.2.27), (Ic) + (2.3.1), |
| (Ic) + (2.3.2), (Ic) + (2.3.3), (Ic) + (2.4.1), (Ic) + (2.4.2). |

In der Tabelle 4 bedeuten:
- (Ia) =: Verbindung der oben genannten Formel (Ia), d. h. 2-Hydroxy-6-trifluormethylpyridin-3-carboxamid (oder in tautomeren Oxo-Form: 2-Oxo-6-trifluormethyl-1,2-dihydropyridin-3-carboxamid),
- (Ib) =: Verbindung der oben genannten Formel (Ib), d. h. 2-Hydroxy-6-difluorchlormethyl-pyridin-3-carboxamid (oder in tautomeren Oxo-Form: 2-Oxo-6-difluorchlormethyl-1,2-dihydropyridin-3-carboxamid),
- (Ic) =: Verbindung der oben genannten Formel (Ic), d. h. 2-Hydroxy-6-difuormethylpyridin-3-carboxamid (oder in tautomeren Oxo-Form: 2-Oxo-6-difuormethyl-1,2-dihydropyridin-3-carboxamid),
- (Nr.) =: Verbindung mit der Nummer aus Tabelle 3

Neben den genannten Safener-Herbizid-Kombinationen (siehe Tabelle 4) sind auch solche bevorzugt, in denen eine der genannten Zweierkombinationen mit einem weiteren herbiziden oder pestiziden Wirkstoff oder auch einem weiteren Safener zu einer Mehrkomponentenkombinationen (Dreier-, Vierer- oder Fünferwirkstoffkombination) erweitert wird. Dabei kommen als weitere Wirkstoffe vorzugsweise die Herbizide oder Safener aus der genannten Tabelle 1 bzw. die Herbizde aus Tabelle 2 in Frage. Bevorzugt sind dabei weitere einzelne Verbindungen aus der genannten Tabelle 3.

Im Falle der Anwendung als Wirkstofformulierungen oder Coformulierungen enthalten diese gegebenenfalls in der Regel die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Die Verbindungen der allgemeinen Formel (I) und deren Kombinationen mit einem oder mehreren der genannten Pestizide können in Abhängigkeit von den vorgegebenen chemisch-physikalischen und biologischen Parametern auf verschiedene Arten formuliert werden. Als Formulierungsarten sind beispielsweise geeignet:
- Emulgierbare Konzentrate, die durch Auflösen der Wirkstoffe in einem organischen Lösungsmittel, z.B. Butanol, Cyclohexanon, Dimethylformamid, Xylol oder auch höher siedenden Kohlenwasserstoffen oder Mischungen der organischen Lösungsmittel unter Zusatz von einem oder mehreren Tensiden ionischer und/oder nichtionischer Art (Emulgatoren) hergestellt werden. Geeignete Emulgatoren sind beispielsweise alkylarylsulfonsaure Calcium-Salze, Fettsäurepolyglykolester, Alkylarylpolyglykolether, Fettalkoholpolyglykol-ether, Propylenoxid-Ethylenoxid-Kondensationsprodukte, Alkylpolyether, Sorbitanester und Polyoxyethylensorbitanfettsäureester;
- Stäubemittel, die durch Vermahlen der Wirkstoffe mit fein-verteilten festen anorganischen oder organischen Stoffen, z.B. Talkum, natürlichen Tonen, wie Kaolin, Bentonit und Pyrophyllit, Diatomeenerde oder Mehlen erhalten werden.
- auf Wasser oder Öl basierende Suspensionskonzentrate, die beispielsweise durch Naßvermahlung mittels Perlmühlen hergestellt werden können;
- wasserlösliche Pulver;
- wasserlösliche Konzentrate;
- Granulate, wie wasserlösliche Granulate, wasserdispergierbare Granulate sowie Granulate für die Streu- und Bodenapplikation;
- Spritzpulver, die neben Wirkstoff noch Verdünnungs- oder Inertstoffe und Tenside enthalten;
- Kapselsuspensionen und Mikrokapseln;
- Ultra-Low-Volume-Formulierungen.

Die oben genannten Formulierungsarten sind dem Fachmann bekannt und werden beispielsweise beschrieben in: K. Martens, "Spray Drying Handbook", 3rd Ed., G. Goodwin Ltd., London. 1979; W. van Valkenburg, "Pesticide Formulations", Marcel Dekker, N.Y. 1973; Winacker-Küchler, "Chemische Technologie", Band 7, C. Hanser Verlag München, 4. Auflage 1986; "Perry's Chemical Engineer's Handbook", 5th Ed., McGraw-Hill, N.Y. 1973, Seiten 8-57.

Die notwendigen Formulierungshilfsmittel wie Inertmaterialien, Tenside, Lösungsmittel und weitere Zusatzstoffe sind ebenfalls bekannt und werden beispielsweise beschrieben in: McCutcheon's "Detergents and Emulsifiers Annual", MC Publ. Corp., Ridgewood N.J.; C. Marsden, "Solvents Guide", 2nd Ed., Interscience, N.Y. 1963; H. von Olphen, "Introduction to Clay Colloid Chemistry", 2nd Ed., J. Wiley & Sons, N.Y.; Schönfeldt, "Grenzflächenaktive Äthylenoxidaddukte", Wiss. Verlagsgesellschaft, Stuttgart 1976; Sisley and Wood, "Encyclopedia of Surface Active Agents", Chem. Publ. Co. Inc., N.Y. 1964; Watkins, "Handbook of Insecticide Dust Diluents and Carriers", 2nd Ed., Darland Books, Caldwell N.J.; Winnacker-Küchler, "Chemische Technologie", Band 7, C. Hanser Verlag München, 4. Auflage 1986.

Außer den vorstehend genannten Formulierungshilfsmitteln können die nutzpflanzenschützenden Mittel gegebenenfalls übliche Haft-, Netz-, Dispergier-, Penetrations-, Emulgier-, Konservierungs-, Frostschutz-, Füll-, Träger- und Farbstoffe, Entschäumer, Verdunstungshemmer sowie den pH-Wert oder die Viskosität beeinflussende Mittel enthalten.

Je nach Art der Formulierung enthalten die nutzpflanzenschützenden Mittel in der Regel 0,1 bis 99 Gew.-%, insbesondere 0,2 bis 95 Gew.-%, eines oder mehrerer Safener der allgemeinen Formel (I) oder eine Kombination von Safener und Pestizid. Weiterhin enthalten sie 1 bis 99,9, insbesondere 4 bis 99,5 Gew.-%, eines oder mehrerer fester oder flüssiger Zusatzstoffe und 0 bis 25, insbesondere 0,1 bis 25 Gew.-% eines Tensids. In emulgierbaren Konzentraten beträgt die Wirkstoffkonzentration, d.h. die Konzentration von Safener und/oder Pestizid, in der Regel 1 bis 90, insbesondere 5 bis 80 Gew.-%. Stäubemittel enthalten üblicherweise 1 bis 30, vorzugsweise 5 bis 20 Gew.-% Wirkstoff. In Spritzpulvern beträgt die Wirkstoffkonzentration in der Regel 10 bis 90 Gew.-%. Bei den in Wasser dispergierbaren Granulaten liegt der Gehalt an Wirkstoff beispielsweise zwischen 1 und 95 Gew.-%, vorzugsweise zwischen 10 und 80 Gew.-% .

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Mit den äußeren Bedingungen wie Temperatur, Feuchtigkeit, der Art des verwendeten Herbizids u. a. variiert die erforderliche Aufwandmenge der Safener.

In den nachfolgenden Beispielen (Formulierungsbeispiele, Herstellungsbeispiele, biologische Beispiele), die die Erfindung erläutern aber nicht limitieren, beziehen sich die Mengenangaben auf das Gewicht, wenn nicht Näheres definiert ist.

### BEISPIELE

### 1 FORMULIERUNGSBEISPIELE

### 1.1 STÄUBEMITTEL

Ein Stäubemittel wird erhalten, indem man 10 Gew.-Teile einer Verbindung der Formel (I) oder eines Wirkstoffgemischs aus einem Pestizid (z. B. Herbizid) und einem Safener der Formel (I) und 90 Gew.-Teile Talkum als Inertstoff mischt und in einer Schlagmühle zerkleinert.

### 1.2 WASSERDISPERGIERBARES PULVER

Ein in Wasser leicht dispergierbares, benetzbares Pulver wird erhalten, indem man 25 Gewichtsteile einer Verbindung der Formel (I) oder eines Wirkstoffgemischs aus einem Pestizid (z. B. Herbizid) und einem Safener der Formel (I), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.

### 1.3 WASSERDISPERGIERBARES KONZENTRAT

Ein in Wasser leicht dispergierbares Dispersionskonzentrat wird erhalten, indem man 20 Gewichtsteile einer Verbindung der Formel (I) oder eines Wirkstoffgemischs aus einem Pestizid (z. B. Herbizid) und einem Safener der Formel (I) mit 6 Gew.-Teilen Alkylphenolpolyglykolether (^{®}Triton X 207), 3 Gew.-Teilen Isotridecanolpolyglykolether und 71 Gew.-Teilen paraffinischem Mineralöl mischt und in einer Reibkugelmühle auf eine Feinheit von unter 5 Mikron vermahlt.

### 1.4 EMULGIERBARES KONZENTRAT

Ein emulgierbares Konzentrat wird erhalten aus 15 Gew.-Teilen einer Verbindung der Formel (I) oder eines Wirkstoffgemischs aus einem Pestizid (z. B. Herbizid) und einem Safener der Formel (I), 75 Gew.-Teilen Cyclohexanon als Lösungsmittel und 10 Gew.-Teilen oxethyliertes Nonylphenol als Emulgator.

### 1.5 WASSERDISPERGIERBARES GRANULAT

Ein in Wasserdispergierbares Granulat wird erhalten, indem man

| | | |
|---|---|---|
| 75 | Gewichtsteile | eines Safeners der Formel (I) oder eines Gemischs |
| | | eines Pestizids und eines Safeners der Formel (I), |
| 10 | " | ligninsulfonsaures Calcium, |
| 5 | " | Natriumlaurylsulfat, |
| 3 | " | Polyvinylalkohol und |
| 7 | " | Kaolin |

mischt, in einer Stiftmühle mahlt und das Pulver in einem Wirbelbett durch Aufsprühen von Wasser als Granulierflüssigkeit granuliert.

Ein in Wasser dispergierbares Granulat wird auch erhalten, indem man

| | | |
|---|---|---|
| 25 | Gewichtsteile | eines Safeners der Formel (I) oder eines Gemischs |
| | | eines Pestizids und eines Safeners der Formel (I), |
| 5 | " | 2,2'-dinaphthylmethan-6,6'-disulfonsaures Natrium, |
| 2 | " | oleoylmethyltaurinsaures Natrium, |
| 17 | " | Calciumcarbonat, |
| 50 | " | Wasser und |
| 1 | Gewichtsteil | Polyvinylalkohol |

auf einer Kolloidmühle homogenisiert, zerkleinert, dann in einer Perlmühle mahlt und die so erhaltene Suspension in einem Sprühturm mittels einer Einstoffdüse zerstäubt und trocknet.

### 2. HERSTELLUNGSBEISPIELE

### Beispiel 1

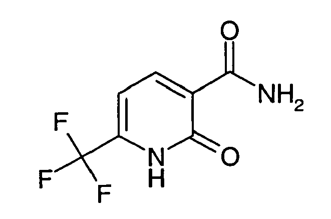

### 2-Oxo-6-trifluormethyl-1,2-dihydropyridin-3-carboxamid

### 1.1) 4-Butoxy-1,1,1-trifluorbut-3-en-2-on

Ein Gemisch aus 29,9 g (0,38 mol) Pyridin und 50,0 g (0,38 mol) Butylvinylether in 200 ml Trichlormethan wurde unter Rühren bei 5 °C mit 79,9 g (0,38 mol) Trifluoressigsäureanhydrid - gelöst in 100 ml Trichlormethan - versetzt. Nach Zugabe wurde noch 15 h bei Raumtemperatur nachgerührt. Die Mischung wurde anschließend mit 300 ml Wasser versetzt, die organische Phase abgetrennt, getrocknet und eingeengt. Man erhielt 59 g (79 % d. Th.) eines gelblichen Öls.
1H-NMR: [CDCl₃] 0,96 (t, 3H); 1,41 (m, 2H); 1,73 (m, 2H); 4,04 (t, 2H); 5,85 (d, 1H); 7,90 (d, 1H)

### 1.2) 2-Oxo-6-trifluormethyl-1,2-dihydropyridin-3-carboxamid

Nach Auflösung von 2,81 g (0,122 mol) Natrium in 200 ml Ethanol wurden 20,0g (0,102 mol) 4-Butoxy-1,1,1-trifluorbut-3-en-2-on und 10,41 g (0,102 mol) Malonsäurediamid zugesetzt und die Mischung 7 h unter Rückfluß erhitzt. Die Mischung wurde anschließend etwas eingeengt (ca. 50 ml) und mit 1n Salzsäure versetzt. Der dabei ausfallende Niederschlag wurde abgesaugt und getrocknet. Man erhielt 12,9 g (61 % d. Th.) eines gelben Pulvers.
1H-NMR: [DMSO] 7,40 (br, 1H); 8,10 (br, 1H); 8,45 (d, 2H); 13,7 (br, 1H).

### Beispiel 2

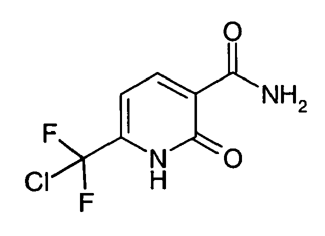

### 6-Chlor(difluor)methyl-2-oxo-1,2-dihydropyridin-3-carboxamid

### 2.1) 4-Butoxy-1-chlor-1,1-difluorbut-3-en-2-on

Ein Gemisch aus 1,60 g (20,2 mmol) Pyridin und 2,1 g (20,2 mmol) Butylvinylether in 30 ml Trichlormethan wurde unter Rühren bei 5 °C mit 5,0 g (20,2 mmol) Chlordifluoressigsäureanhydrid - gelöst in 10 ml Trichlormethan - versetzt. Nach Zugabe wurde noch 15 h bei Raumtemperatur nachgerührt. Die Mischung wurde anschließend mit 100 ml Wasser versetzt, die organische Phase abgetrennt, getrocknet und eingeengt. Man erhielt 3,4 g (80 % d. Th.) eines gelblichen Öls.
1H-NMR: [DMSO] 0,90 (t, 3H); 1,35 (m, 2H); 1,65 (m, 2H); 4,20 (t, 2H); 6,04 (d, 1H); 8,10 (d, 1H).

### 2.2) 6-Chlor(difluor)methyl-2-oxo-1,2-dihydropyridin-3-carboxamid

Nach Auflösung von 1,29 g (55,9 mmol) Natrium in 150 ml Ethanol wurden 9,90 g (46,6 mol) 4-Butoxy-1-chlor-1,1-difluorbut-3-en-2-on und 4,90 g (46,6 mmol) Malonsäurediamid zugesetzt und die Mischung 5 h unter Rückfluß erhitzt. Die Mischung wurde anschließend etwas eingeengt (ca. 50 ml) und mit 1n Salzsäure versetzt. Der dabei ausfallende Niederschlag wurde abgesaugt und getrocknet. Man erhielt 4,2 g (41 % d. Th.) eines gelben Pulvers.
1H-NMR: [DMSO] 7,35 (d, 1H); 8,10 (br, 1H); 8,40 (d, 1H); 8,41 (br, 1H); 13,6 (br, 1H).

Andere Verbindungen der Formel (I) können in analoger Weise hergestellt werden.

### 3. Biologische Beispiele

### 3.1 BONITIERUNG DER SCHADWIRKUNG

Die Schadwirkung an den Pflanzen wird nach einer Skala von 0-100 % optisch im Vergleich zu Kontrollpflanzen bewertet:
- 0% =: keine erkennbare Wirkung im Vergleich zur unbehandelten Pflanze
- 100% =: behandelte Pflanze stirbt ab.

### 3.2 HERBIZIDWIRKUNG UND SAFENERWIRKUNG IM NACHAUFLAUF

Samen bzw. Rhizomstücke von mono- und dikotylen Schadpflanzen und von Kulturpflanzen werden in Torftöpfen in sandiger Lehmerde ausgelegt, mit Erde abgedeckt und im Gewächshaus unter guten Wachstumsbedingungen angezogen. Alternativ hierzu werden im Paddy-Reisanbau vorkommende Schadpflanzen in Töpfen kultiviert, in denen Wasser bis zu 2 cm über der Bodenoberfläche steht. Zehn bis zwanzig Tage nach der Aussaat werden die Versuchspflanzen im ein bis Dreiblattstadium behandelt. Die als wasserlösliche Pulver oder Suspensionen formulierten erfindungsgemäßen Herbizid-Safener-Wirkstoffkombinationen sowie in parallelen Versuchen die entsprechend formulierten Einzelwirkstoffe werden in verschiedenen Dosierungen mit einer Wasseraufwandmenge von umgerechnet 300 l/ha auf die grünen Pflanzenteile gesprüht und nach 2-3 Wochen Standzeit der Versuchspflanzen im Gewächshaus unter optimalen Wachstumsbedingungen die Wirkung der Präparate optisch im Vergleich zu unbehandelten Kontrollen bonitiert. Bei Reis oder bei Schadpflanzen, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht.

Die Versuche zeigen, dass erfindungsgemäße Safener, beispielsweise die Verbindungen der Formeln (Ia), (Ib) und (lc), in Kombination mit Herbiziden Schäden des jeweiligen Herbizids an Kulturpflanzen wie Mais, Reis, Weizen oder Gerste oder anderem Getreide im Vergleich zur Anwendung der einzelnen Herbizide ohne Safener wesentlich reduzieren, d.h. um 20% bis zu 100% geringere Schäden an der Kulturpflanze beobachtet werden. Gleichzeitig wird die Wirkung des Herbizids an wirtschaftlich bedeutenden Schadpflanzen nicht oder nicht wesentlich beeinträchtigt, so dass eine gute herbizide Nachauflaufwirkung gegen ein breites Spektrum von Ungräsern und Unkräutern erreicht werden kann. Einige Versuchsergebnisse sind in der Tabelle 5 zusammengestellt.

**Tabelle 5: Herbizid- und Safenerwirkung im Nachauflauf**

| Herbizid Nr. | Dosis Herbizid [g AS/ha] | Dosis Safener (Ia) [g AS/ha] | Kulturpflanze | Reduktion der Schadwirkung |
|---|---|---|---|---|
| (1.3.1.20c) | 400 | 100 | HORVU | Kategorie A |
| (1.3.1.20c) | 100 | 20 | TRZAS | Kategorie A |
| (1.2.1.14) | 40 | 80 | TRZAS | Kategorie A |
| (1.1.1.10) | 20 | 100 | HORVU | Kategorie A |
| (1.1.1.10) | 20 | 80 | TRZAS | Kategorie A |
| (1.2.1.58) | 15 | 100 | HORVU | Kategorie A |
| (1.2.1.58) | 15 | 100 | TRZAS | Kategorie A |
| (1.1.2.10) | 200 | 100 | TRZAS | Kategorie A |
| (2.2.12) | 100 | 50 | TRZAS | Kategorie B |
| (2.2.12) | 50 | 50 | ZEAMX | Kategorie A |
| (1.2.1.48) | 100 | 50 | ZEAMX | Kategorie A |
| (1.2.1.11b) | 100 | 50 | ZEAMX | Kategorie B |
| (1.1.1.4) | 400 | 75 | ORYSA | Kategorie A |
| (1.1.1.4)^{*)} | 600 | 75 | ORYSA | Kategorie A |
| (1.3.1.20c) | 100 | 300 | ORYSA | Kategorie A |
| (1.2.1.58) | 10 | 300 | ORYSA | Kategorie A |
| (1.2.1.15) | 15 | 100 | ORYSA | Kategorie B |
| (1.2.1.14)+ (1.2.1.11b) | 4 + 0,8 | 150 | ORYSA | Kategorie A |
| (1.2.1.62b) | 200 | 75 | ORYSA | Kategorie A |

Abkürzungen in Tabelle 5:
- Herbizid Nr. =: Herbizid gemäß der Nummer aus Tabelle 4
- Safener (Ia) =: Safener gemäß Formel (Ia), d. h. 2-Oxo-6-trifluormethyl-1,2-dihydropyridin-3-carboxamid
- Kategorie A =: 50-100% Reduktion der Schadwirkung
- Kategorie B =: 20-49% Reduktion der Schadwirkung
- AS =: Aktivsubstanz (bezogen auf 100% Wirkstoff)
- *) =: appliziert ins Anstauwasser (Paddy-Reis-Bedingungen)
- HORVU =: Hordeum vulgare (Gerste)
- TRZAS =: Triticum aestivum (spring wheat)
- ZEAMX =: Zea mays (maize)
- ORYSA =: Oryza sativa (rice)

### 3.3 HERBIZIDWIRKUNG UND SAFENERWIRKUNG IM VORAUFLAUF

Samen bzw. Rhizomstücke von mono- und dikotylen Unkrautpflanzen und Kulturpflanzen wurden in Torftöpfen in sandiger Lehmerde ausgelegt und mit Erde abgedeckt. Die als wasserlösliche Pulver oder Suspensionen formulierten erfindungsgemäßen Herbizid-Safener-Wirkstoffkombinationen sowie in parallelen Versuchen die entsprechend formulierten Einzelwirkstoffe wurden dann in verschiedenen Dosierungen mit einer Wasseraufwandmenge von umgerechnet 300 bis 800 I/ha auf die Oberfläche der Abdeckerde appliziert.

Nach der Behandlung wurden die Töpfe im Gewächshaus aufgestellt und unter guten Wachstumsbedingungen für die Unkräuter und die Kulturpflanzen gehalten. Die optische Bonitur der Pflanzen- bzw. Auflaufschäden erfolgte nach dem Auflaufen der Versuchspflanzen nach einer Versuchszeit von 2 bis 4 Wochen im Vergleich zu unbehandelten Kontrollen.

Die Versuche zeigen, dass erfindungsgemäße Safener, beispielsweise die Verbindungen der Formeln (Ia), (Ib) und (Ic), in Kombination mit Herbiziden Schäden des jeweiligen Herbizids an Kulturpflanzen wie Mais, Reis, Weizen oder Gerste oder anderem Getreide im Vergleich zur Anwendung der einzelnen Herbizide ohne Safener wesentlich reduzieren, d.h. um 20% bis zu 100% geringere Schäden an der Kulturpflanze beobachtet werden. Gleichzeitig wird die Wirkung des jeweiligen Herbizids an wirtschaftlich bedeutenden Schadpflanzen nicht oder nicht wesentlich beeinträchtigt, so dass eine gute herbizide Vorauflaufwirkung gegen ein breites Spektrum von Ungräsern und Unkräutern erreicht werden kann. Einige Versuchsergebnisse sind in der Tabelle 6 zusammengestellt.

**Tabelle 6: Herbizid- und Safenerwirkung im Vorauflauf**

| Herbizid Nr. | Dosis Herbizid [g AS/ha] | Dosis Safener (Ia) [g AS/ha] | Kulturpflanze | Reduktion der Schadwirkung |
|---|---|---|---|---|
| (1.1.1.22) | 300 | 300 | ZEAMX | Kategorie A |
| (1.4.4.17) | 125 | 150 | ZEAMX | Kategorie A |
| (2.2.16) | 400 | 75 | ORYSA | Kategorie B |

Abkürzungen in Tabelle 6:
- Herbizid Nr. =: Herbizid gemäß der Nummer aus Tabelle 4
- Safener (Ia) =: Safener gemäß Formel (Ia), d. h. 2-Oxo-6-trifluormethyl-1,2-dihydropyridin-3-carboxamid
- AS =: Aktivsubstanz (bezogen auf 100% Wirkstoff)
- Kategorie A =: 50-100% Reduktion der Schadwirkung
- Kategorie B =: 20-49% Reduktion der Schadwirkung
- ZEAMX =: Zea mays (maize)
- ORYSA =: Oryza sativa (rice)

### 3.4 SAATGUTBEHANDLUNG

Saatkörner von Kulturpflanzen wurden mit den als Suspensions- oder Emulsionskonzentraten formulierten erfindungsgemäßen Safenern und Wasser in Flaschen gemischt und gut geschüttelt, so dass die Saatkörner gleichmäßig mit der Formulierung des jeweiligen Safeners beschichtet wurden. Die Saatkörner bzw. die aufgelaufenen Pflanzen wurden dann im Vorauflauf- oder Nachauflaufverfahren entsprechend den Versuchen nach Beispielen 3.3 bzw. 3.2 mit Herbiziden getestet.

Auch bei der Behandlung von Saatgut zeigten die Safener gute Wirkung. Die herbizide Wirkung der verwendeten Herbizidwirkstoffe war dabei nicht beeinträchtigt. Einige Versuchsergebnisse sind in der Tabelle 7 zusammengestellt.

**Tabelle 7: Herbizid- und Safenerwirkung bei Saatgutbehandlung mit Safener**

| Herbizid Nr. | Dosis Herbizid [g AS/ha] | Dosis Safener (Ia) [g AS/kg Saatgut] | Kulturpflanze | Reduktion der Schadwirkung |
|---|---|---|---|---|
| (1.2.1.14) | 30 | 0,5 | HORVU | Kategorie A |
| (1.2.1.14) | 30 | 1,0 | TRZAS | Kategorie A |
| (1.2.1.58) | 15 | 1,0 | HORVU | Kategorie A |
| (1.2.1.58) | 15 | 1,0 | TRZAS | Kategorie A |
| (1.2.1.58) | 5 | 1,0 | ZEAMX | Kategorie A |
| (1.1.1.22) | 200 | 0,5 | ZEAMX | Kategorie A |

Abkürzungen in Tabelle 7:
- Herbizid Nr. =: Herbizid gemäß der Nummer aus Tabelle 4
- Safener (Ia) =: Safener gemäß Formel (Ia), d. h. 2-Oxo-6-trifluormethyl-1,2-dihydropyridin-3-carboxamid
- AS =: Aktivsubstanz (bezogen auf 100% Wirkstoff)
- Kategorie A =: 50-100% Reduktion der Schadwirkung
- HORVU =: Hordeum vulgare (Gerste)
- TRZAS =: Triticum aestivum (spring wheat)
- ZEAMX =: Zea mays (maize)

## Patentansprüche

1. Verwendung von Verbindungen der allgemeinen Formel (I) oder deren Salzen (Pyridin-2-oxy-3-carbonamiden), 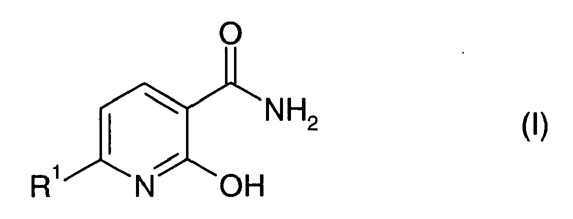 worin
R¹ einen (C₁-C₄)Haloalkylrest bedeutet,
als Safener, das heißt, als Mittel zum Vermeiden oder Reduzieren von phytotoxischen Wirkungen von Pestiziden, vorzugsweise Herbiziden, an Nutzplanzen.

2. Verwendung nach Anspruch 1, **dadurch gekennzeichnet, dass**
R¹ einen Rest der Formel CF₃, CF₂Cl oder CF₂H bedeutet.

3. Verwendung nach Anspruch 1, **dadurch gekennzeichnet, dass**
R¹ einen Rest der Formel CF₃ bedeutet.

4. Verwendung nach Anspruch 1, **dadurch gekennzeichnet, dass**
R¹ einen Rest der Formel CF₂Cl bedeutet.

5. Verwendung nach Anspruch 1, **dadurch gekennzeichnet, dass**
R¹ einen Rest der Formel CF₂H bedeutet.

6. Pflanzenschutzmittel, **dadurch gekennzeichnet, dass** es Verbindungen der Formel (I) oder deren Salze, wie sie nach einem der Ansprüche 1 bis 5 definiert sind, und Formulierungshilfsmittel enthält.

7. Pflanzenschutzmittel nach Anspruch 6, **dadurch gekennzeichnet, dass** es ein oder mehrere Pestizide und gegebenenfalls Formulierungshilfsmittel enthält.

8. Verfahren zum Schützen von Nutz- oder Kulturpflanzen vor phytotoxischen Nebenwirkungen von Pestiziden, **dadurch gekennzeichnet, dass** eine wirksame Menge einer oder mehrerer Verbindungen der Formel (I) oder deren Salze, wie sie nach einem der Ansprüche 1 bis 5 definiert sind, vor, nach oder gleichzeitig mit dem oder den Pestiziden auf die Pflanzen, Pflanzenteile, Pflanzensamen oder das Saatgut appliziert.

9. Verfahren nach Anspruch 8, **dadurch gekennzeichnet, dass** die Applikation im Nachauflaufverfahren erfolgt.

10. Verfahren nach Anspruch 8, **dadurch gekennzeichnet, dass** die Applikation mit der Verbindung der Formel (I) oder deren Salz durch Behandlung der Pflanzensamen oder des Saatguts erfolgt.

11. Verfahren nach Anspruch 8, **dadurch gekennzeichnet, dass** die Applikation im Vorauflaufverfahren erfolgt.

12. Verfahren zur selektiven Bekämpfung von Schadpflanzen in Nutzpflanzenkulturen, **dadurch gekennzeichnet, dass** man eine wirksame Menge einer oder mehrerer Verbindungen der Formel (I) oder deren Salze, wie sie nach einem der Ansprüche 1 bis 5 definiert sind, vor, nach oder gleichzeitig mit einem oder mehreren Herbiziden auf die Pflanzen, Pflanzenteile, Pflanzensamen oder das Saatgut appliziert.

13. Verfahren nach Anspruch 12, **dadurch gekennzeichnet, dass** man das Saatgut mit einer oder mehreren Verbindungen der Formel (I) oder deren Salze behandelt und das Herbizid nach der Einsaat im Vorauflaufverfahren oder im Nachauflaufverfahren appliziert.
